(19) Europäisches Patentamt / European Patent Office / Office européen des brevets

(11) EP 3 133 109 B1

(12) **EUROPEAN PATENT SPECIFICATION**

(45) Date of publication and mention of the grant of the patent:
**14.08.2019 Bulletin 2019/33**

(21) Application number: **15779819.0**

(22) Date of filing: **10.04.2015**

(51) Int Cl.:
***B29D 7/01*** *(2006.01)* ***B29C 43/00*** *(2006.01)*
***B29C 45/14*** *(2006.01)* ***B29C 51/00*** *(2006.01)*
***C08J 5/18*** *(2006.01)* ***C08K 7/00*** *(2006.01)*
***C08L 69/00*** *(2006.01)* ***C08K 7/02*** *(2006.01)*
***C08K 3/40*** *(2006.01)* *B29K 69/00* *(2006.01)*

(86) International application number:
**PCT/JP2015/061208**

(87) International publication number:
**WO 2015/159813 (22.10.2015 Gazette 2015/42)**

(54) **REINFORCED AROMATIC POLYCARBONATE RESIN SHEET OR FILM AND METHOD FOR PRODUCING SAID SHEET OR FILM**

FOLIE ODER FILM AUS VERSTÄRKTEM AROMATISCHEM POLYCARBONATHARZ SOWIE METHODE ZU DEREN HERSTELLUNG

FEUILLE OU FILM DE RÉSINE DE POLYCARBONATE AROMATIQUE DE RENFORCEMENT ET MÉTHODE DE LEUR PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.04.2014 JP 2014083227**
**14.04.2014 JP 2014083228**

(43) Date of publication of application:
**22.02.2017 Bulletin 2017/08**

(73) Proprietors:
- **Mitsubishi Gas Chemical Company, Inc.**
  **Tokyo 100-8324 (JP)**
- **MGC Filsheet Co., Ltd.**
  **Saitama 359-1164 (JP)**

(72) Inventors:
- **KUROKAWA, Haruhiko**
  **Tokyo 125-8601 (JP)**
- **ISHII, Hiroki**
  **Tokyo 125-8601 (JP)**
- **NAKASHIMA, Masatoshi**
  **Tokyo 125-8601 (JP)**

(74) Representative: **Hoffmann Eitle**
**Patent- und Rechtsanwälte PartmbB**
**Arabellastraße 30**
**81925 München (DE)**

(56) References cited:
**EP-A1- 1 770 126** **EP-A1- 2 532 697**
**EP-A1- 2 735 589** **WO-A1-99/33919**
**WO-A1-2011/096089** **WO-A1-2013/011804**
**JP-A- H07 286 096** **JP-A- H11 320 679**
**JP-A- 2002 226 694** **JP-A- 2006 124 517**
**JP-A- 2006 277 914** **JP-A- 2006 348 299**
**JP-A- 2009 102 589** **JP-A- 2012 007 120**
**JP-A- 2012 251 083** **JP-A- 2013 107 920**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

TECHNICAL FIELD

The present invention relates to an aromatic polycarbonate resin sheet and film reinforced with a reinforcing filling material. Specifically, the present invention relates to a reinforced aromatic polycarbonate resin sheet and film that has improved mechanical properties such as bending characteristics and, moreover, an excellent surface smoothness by addition of a filling material, and relates to a molded article obtained by thermally shaping said reinforced aromatic polycarbonate resin sheet and film.

BACKGROUND ART

Aromatic polycarbonate resins are widely used as resin materials for producing housings for electric/electronic apparatuses, automobile parts, and precision molded articles such as optical disk-related parts, due to its good transparency, impact resistance and heat resistance and also because the resulting molded articles have good dimensional stability and the like. In particular, housings for household electric appliances, electronic apparatuses, image display apparatuses and the like can achieve high commodity value by taking advantage of their beautiful appearances.

Conventionally, for the purpose of further improving mechanical properties such as elastic modulus, bending strength, rigidity and impact resistance of an aromatic polycarbonate resin, glass-reinforced aromatic polycarbonate resin compositions have been proposed which are obtained by blending a glass reinforcing material such as glass fiber into an aromatic polycarbonate resin (Patent Documents 1 and 2). Such materials, however, have a problem of low transparency due to great difference between the refractive indexes of the aromatic polycarbonate and the glass reinforcing material.

A resin sheet has been proposed which is made from a glass-reinforced aromatic polycarbonate resin composition obtained by combining glass cloth with an aromatic polycarbonate resin (Patent Document 3). Such sheets, however, have problems of low productivity since the glass cloth needs to be impregnated in an organic solvent, and disadvantages in terms of cost, for example, for installing an apparatus for collecting the solvent.

A multilayer resin sheet has been proposed which is made of a glass-reinforced sheet obtained by blending glass fiber into an aromatic polycarbonate resin and a non-reinforced layer (Patent Document 4). Such sheet, however, are intended for obtaining punching workability by providing the non-reinforced layer, and have a problem of lower elastic modulus due to laminating the non-reinforced layer, and have difficulty in obtaining rigidity feeling as a thin sheet.

Furthermore, a resin composition with high transparency obtained by adding an acrylic resin and E-glass to aromatic polycarbonate has already been proposed (Patent Document 5). According to this patent document, by placing zirconia ceramic with low thermal conductivity into a die and by using an injection molding machine that has high mold clamping force and high resin filling pressure, an injection-molded article with excellent transparency and physical properties can be obtained. Such methods, however, are substantially limited to injection molding, and are not suitable for a large-sized thin molded article. Therefore, they are not suitable, in particular, for molding or shaping sheets with low resin press pressure.

Moreover, a resin composition obtained by blending a polyester resin and ECR-glass having a high refractive index into aromatic polycarbonate has already been proposed (Patent Document 6). According to this patent document, however, a polyester having an aromatic ring introduced into at least one of diol or dicarboxylic acid is used as the polyester, which causes low compatibility and requires addition of a transesterification catalyst in order to enhance transparency. As a result, the resulting resin composition has problems of poor color tone and moist heat resistance.

A resin composition obtained by adding polycyclohexane dimethanol-cyclohexane dicarboxylate (PCC) and glass fiber to aromatic polycarbonate has also been proposed (Patent Document 7).

None of Patent Documents 1-7 mention surface roughness of the glass fiber-reinforced resin sheets or an improvement method thereof. Patent Document 8 is directed to molded articles of reinforced polycarbonate resin compositions comprising higher amounts of inorganic filler and showing excellent haze and flame retardancy. Patent Document 9 relates to an aromatic polycarbonate resin composition which is excellent in flame retardancy while suppressing melt dripping at the time of combustion. Patent Document 10 is directed to an aromatic polycarbonate resin composition showing improved mechanical properties due to the use of glass reinforcement material having a granular, fibrous or flake-like shape. Patent Document 11 is directed to an aromatic polycarbonate resin composition which has improved mechanical properties, such as impact resistance, by blending of an impact strength improver and which also shows excellent transparency and good surface hardness. However, none of Patent Documents 8-11 mention the role of specifically shaped fibrous reinforcing filling material or specific mold and cooling roll temperatures in a process for forming sheets and films of the resin compositions.

PRIOR ART DOCUMENTS

[Patent Documents]

Patent Document 1: Japanese Unexamined Patent Application Publication No. Heisei 09-12858

Patent Document 2: Japanese Unexamined Patent Application Publication No. 2006-257182

Patent Document 3: Japanese Unexamined Patent Application Publication No. 2011-140165

Patent Document 4: Japanese Unexamined Patent Application Publication No. Heisei 01-297238

Patent Document 5: Japanese Unexamined Patent Application Publication No. 2012-246343

Patent Document 6: Japanese Unexamined Patent Application Publication No. Heisei 09-95607

Patent Document 7: Japanese Unexamined Patent Application Publication No. 2006-348299

Patent Document 8: Japanese Unexamined Patent Application Publication No. 2006-124517

Patent Document 9: European Patent Application 1 770 126 A1

Patent Document 10: Japanese Unexamined Patent Application Publication No. 2012-251083

Patent Document 11: European Patent Application 2 735 589 A1

SUMMARY OF THE INVENTION

Problems to be Solved by the Invention

A sheet/film obtained by blending a glass reinforcing material such as glass fiber into an aromatic polycarbonate resin can improve mechanical properties such as bending elastic modulus and bending strength. However, according to conventional melt extrusion methods for producing an aromatic polycarbonate resin sheet/film blended with a glass reinforcing material, floating of the reinforcing material on the surface of the molded article cannot be prevented and had a problem of a large surface roughness. Therefore, there were problems where designability was significantly deteriorated upon thermally shaping the sheet, where adhesiveness between the sheet/film was deteriorated, and where appearance was deteriorated upon applying or painting a hard coat.

The objective of the present invention is to solve the above-described conventional problems and to provide an aromatic polycarbonate resin sheet/film that has excellent bending characteristics and surface smoothness.

Means for Solving the Problems

In order to solve the above-described problems, the present inventors have gone through a great deal of examination, as a result of which found that a sheet having unconventionally excellent bending characteristics and surface smoothness can be obtained by adjusting extrusion conditions for producing a polycarbonate resin sheet/film blended with a reinforcing filling material. They also found that a thermally shaped product with excellent appearance can be obtained by using this sheet in air-pressure molding or thermal press molding.

Thus, the present invention relates to a polycarbonate resin sheet or film described below.

[1] A reinforced aromatic polycarbonate resin sheet or film, which is selected from the following embodiments (I) and (II):

(I) A reinforced aromatic polycarbonate resin sheet or film with a thickness of 0.2-1.5 mm comprising: a resin component containing (A) 40-80 pts. mass of an aromatic polycarbonate; and (C) 20-60 pts. mass of a reinforcing filling material, where the total of (A) the aromatic polycarbonate and (C) the reinforcing filling material is 100 pts. mass,

wherein an arithmetic mean surface roughness (Ra) of at least one surface is 2.0 μm or less;
(II) A reinforced aromatic polycarbonate resin sheet or film with a thickness of 0.2-1.5 mm, obtained by mixing 100 pts. mass of a resin component containing (A) 55-90 pts. mass of an aromatic polycarbonate and (B) 10-45 pts. mass of a thermoplastic resin that is compatible with the aromatic polycarbonate and having a refractive index of 1.56 or less at a wavelength of 589 nm, with (C) 5-45 pts. mass of a reinforcing filling material,

wherein "nab" representing the refractive index of the resin blend component of (A) and (B) at a wavelength of 589 nm and "nc" representing the refractive index of (C) the reinforcing filling material at a wavelength of 589 nm satisfy Formula i) below:

$$\text{Formula i)} \quad -0.008 \leq nab - nc \leq +0.008,$$

and an arithmetic mean surface roughness (Ra) of at least one surface is 2.0 μm or less;
characterized in that, in embodiments (I) and (II), the (C) reinforcing filling material contains (c-1) a fibrous filler, wherein the fibers have a length of 5 mm or less and a flat or elliptic cross-sectional shape.

[2] The reinforced aromatic polycarbonate resin sheet or film according to [1], embodiment (II), wherein (B) the thermoplastic resin comprises (B-1) an acrylic resin or (B-2) an aliphatic polyester resin.
[3] The reinforced aromatic polycarbonate resin sheet or film according to [2], wherein (B-1) the acrylic resin is a (meth)acrylate copolymer whose mass ratio (b1/b2) of an aromatic (meth)acrylate unit (b1) and a methyl methacrylate unit (b2) is 5-50/50-95, and whose mass average molecular weight is 5,000-30,000.
[4] The reinforced aromatic polycarbonate resin sheet or film according to [2], wherein (B-2) the aliphatic polyester resin is polycyclohexane dimethanol-cyclohexane dicarboxylate (PCC).
[5] The reinforced aromatic polycarbonate resin sheet or film according to any one of [1], embodiments (I) and (II), [2]-[4], wherein (C) the reinforcing filling material comprises an E-glass reinforcing material.
[6] The reinforced aromatic polycarbonate resin sheet or film according to any one of [1], embodiments (I) and (II), [2]-[5], which is produced by a sheet or film molding method through a T-shaped die melt extruder at a barrel temperature of 260°C or higher and a roll temperature of "glass transition temperature of resin component + 5°C or higher" to "glass transition temperature of resin component + 30°C or lower".
[7] A molded product selected from the following embodiments (a), (b) and (c):

(a) A molded article obtained by subjecting the reinforced aromatic polycarbonate resin sheet or film according to any one of [1]-[6] to air-pressure molding, wherein an arithmetic mean surface roughness (Ra) of the die-non-contacting surface is 10.0 μm or less.
(b) A molded article obtained by subjecting the reinforced aromatic polycarbonate resin sheet or film according to any one of [1]-[6] to thermal press molding, wherein an arithmetic mean surface roughness (Ra) of the die-non-contacting surface is 2.0 μm or less.
(c) A molded body obtained by using the reinforced aromatic polycarbonate resin sheet or film according to any one of [1]-[6] as an in-mold film.

[8] A method for producing a reinforced aromatic polycarbonate resin sheet or film comprising:

a first step of obtaining a resin composition comprising a resin component containing (A) an aromatic polycarbonate and (C) a reinforcing filling material;
a second step of melt-kneading the resin composition to obtain a molten resin composition;
a third step of molding the molten resin composition into a sheet; and
a fourth step of compressing the molten resin composition molded into a sheet with a cooling roll, characterized in that in the second step the melt-kneading is carried out at a temperature of 260°C or higher and that in the fourth step the cooling roll has a surface temperature of "glass transition temperature of resin component + 5°C or higher" to "glass transisiton temperature of resin component + 30°C or lower".

[9] The production method according to [8], wherein the first step comprises the steps of: melt-kneading the resin component containing (A) the aromatic polycarbonate; and adding (C) the reinforcing filling material to the melt-kneaded resin component.

cancelled
cancelled

In this embodiment, a sheet that has unconventionally excellent bending characteristics, surface smoothness, transparency and adhesiveness can be obtained by adjusting the extrusion conditions for producing a sheet/film of a polycarbonate blend material blended with an E-glass reinforcing material. Furthermore, by using such sheet in air-pressure molding or thermal press molding, a thermally shaped product with good appearance and transparency can be obtained.

EFFECT OF THE INVENTION

A polycarbonate resin sheet and film of the present invention with improved surface smoothness has high bending characteristic, good appearance and excellent sheet-to-sheet adhesiveness, and is capable of providing a molded article having such a size that cannot be filled by injection molding. Therefore, it can favorably be used for a sheet and film that is subjected to thermal shaping, for example, for an electronic/electric apparatus housing.

BRIEF DESCRIPTION OF DRAWINGS

[Figure 1] A diagram showing a method for calculating a longer diameter and a shorter diameter of a fiber cross section of flat cross-sectional glass fiber.

MODES FOR CARRYING OUT THE INVENTION

Hereinafter, the present invention will be described in detail. The present invention, however, is not limited to the following embodiments, and can be carried out with any modification without departing from the scope of the invention.

One embodiment of the present invention provides a reinforced aromatic polycarbonate resin sheet or film, with a thickness of 0.2-1.5 mm, comprising: a resin component containing (A) 40-80 pts. mass of an aromatic polycarbonate; and (C) 20-60 pts. mass of a reinforcing filling material, where the total of (A) the aromatic polycarbonate and (C) the reinforcing filling material is 100 pts. mass,
wherein an arithmetic mean surface roughness (Ra) of at least one surface is 2.0 $\mu$m or less, wherein the (C) reinforcing filling material contains (c-1) a fibrous filler, wherein the fibers have a length of 5 mm or less and a flat or elliptic cross-sectional shape.

Another embodiment of the present invention provides a reinforced aromatic polycarbonate resin sheet or film with a thickness of 0.2-1.5 mm, obtained by mixing 100 pts. mass of a resin component containing (A) 55-90 pts. mass of an aromatic polycarbonate and (B) 10-45 pts. mass of a thermoplastic resin that is compatible with the aromatic polycarbonate and having a refractive index of 1.56 or less at a wavelength of 589 nm, with (C) 5-45 pts. mass of a reinforcing filling material,
wherein "nab" representing the refractive index of the resin blend component of (A) and (B) at a wavelength of 589 nm and "nc" representing the refractive index of (C) the reinforcing filling material at a wavelength of 589 nm satisfy Formula i) $-0.008 \leq \text{nab} - \text{nc} \leq +0.008$, and an arithmetic mean surface roughness (Ra) of at least one surface is 2.0 $\mu$m or less, wherein the (C) reinforcing filling material contains (c-1) a fibrous filler, wherein the fibers have a length of 5 mm or less and a flat or elliptic cross-sectional shape..

cancelled

Hereinafter, each of the components of a reinforced aromatic polycarbonate resin sheet or film of the present invention will be described.

A reinforced aromatic polycarbonate resin sheet or film of the present invention comprises: a resin component containing (A) an aromatic polycarbonate resin and optionally (B) a thermoplastic resin and/or an additional resin component; (C) a reinforcing filling material; and, optionally, an additional component. Herein, a "resin sheet" refers to a plate-like molded body with an average thickness of 0.25 mm or more, and a "resin film" refers to a plate-like molded body with an average thickness of less than 0.25 mm.

[(A) aromatic polycarbonate resin]

(A) The aromatic polycarbonate resin (hereinafter, sometimes referred to as "Component (A)") used in the present invention is an optionally branched thermoplastic polymer or copolymer that can be obtained by reacting an aromatic dihydroxy compound or an aromatic dihydroxy compound and a small amount of polyhydroxy compound with phosgene or diester carbonate. A method for producing the aromatic polycarbonate resin is not particularly limited, and those produced by a conventionally known phosgene method (interfacial polymerization method) or melting method (transesterification method) can be used. If a melting method is employed, an aromatic polycarbonate resin having

an adjusted amount of OH group at the terminal group can be used.

Examples of the aromatic dihydroxy compound as a raw material include 2,2-bis(4-hydroxyphenyl)propane (= bisphenol A), tetramethyl bisphenol A, bis(4-hydroxyphenyl)-p-diisopropylbenzene, hydroquinone, resorcinol and 4,4-dihydroxydiphenyl, and preferably include bisphenol A. A compound having one or more tetraalkyl phosphonium sulfonates bound to the above-described aromatic dihydroxy compound can also be used.

In order to obtain a branched aromatic polycarbonate resin, a part of the above-described aromatic dihydroxy compound can be substituted with a branching agent, i.e., a polyhydroxy compound such as phloroglucin, 4,6-dimethyl-2,4,6-tri(4 -hydroxyphenyl)heptene-2, 4,6-dimethyl-2,4,6-tri(4-hydroxyphenyl)heptane, 2,6-dimethyl -2,4,6-tri(4-hydroxyphenylheptene-3, 1,3,5-tri(4-hydroxyphenyl)benzene, 1,1,1-tri(4 -hydroxyphenyl)ethane or the like, or a compound such as 3,3-bis(4-hydroxyaryl)oxindole (= isatinbisphenol), 5-chloroisatin, 5,7-dichloroisatin, 5-bromoisatin or the like. The amount of the substituting compound used is generally 0.01-10 mol%, and preferably 0.1-2 mol% with respect to the aromatic dihydroxy compound.

Among the examples listed above, (A) the aromatic polycarbonate resin is preferably a polycarbonate resin derived from 2,2-bis(4-hydroxyphenyl)propane or a polycarbonate copolymer derived from 2,2-bis(4-hydroxyphenyl)propane and other aromatic dihydroxy compound. It may also be a copolymer mainly composed of a polycarbonate resin, for example, a copolymer with a polymer or an oligomer having a siloxane structure.

The above-described aromatic polycarbonate resin may be used alone or two or more types of them may be used in combination.

In order to adjust the molecular weight of the aromatic polycarbonate resin, a monovalent aromatic hydroxy compound can be used. Examples of such monovalent aromatic hydroxy compound include m- and p-methyphenol, m- and p-propylphenol, p-tert-butylphenol and p-long-chain alkyl-substituted phenol.

While (A) the aromatic polycarbonate resin used in the present invention may have an arbitrary molecular weight depending on usage, which may appropriately be selected and determined, the molecular weight of (A) the aromatic polycarbonate resin is 15,000-40,000 and preferably 15,000-30,000 expressed in terms of viscosity-average molecular weight [Mv], considering moldability, strength and the like. By setting the viscosity-average molecular weight to be 15,000 or more like this, the mechanical strength is likely to be enhanced, which is preferable for use where the mechanical strength is highly required. Herein, a viscosity-average molecular weight [Mv] refers to a viscosity-average molecular weight [Mv] converted from a solution viscosity, that is, a value (viscosity-average molecular weight: Mv) calculated from Schnell's viscosity equation, i.e., $\eta = 1.23 \times 10^{-4} M^{0.83}$, where the intrinsic viscosity [η] (unit: dl/g) is determined at a temperature of 20°C using an Ubbelohde viscometer with methylene chloride as a solvent. Here, an intrinsic viscosity [η] refers to a value obtained by measuring specific viscosity [$\eta_{sp}$] at each solution concentration [c] (g/dl), which is then applied to the following equation.

[Numerical Expression 1]

$$\eta = \lim_{c \to 0} \eta_{sp} / \mathrm{c}$$

Preferably, the viscosity-average molecular weight of (A) the aromatic polycarbonate resin is 17,000-30,000 and particularly 19,000-27,000. Moreover, two or more types of aromatic polycarbonate resins with different viscosity-average molecular weights may be mixed, in which case, an aromatic polycarbonate resin whose viscosity-average molecular weight is out of the above-mentioned preferable range may be mixed. In this case, the viscosity-average molecular weight of the mixture preferably lies within the above-mentioned range.

[(B) Thermoplastic resin]

The reinforced aromatic polycarbonate resin sheet or film of the present invention may contain (B) a thermoplastic resin. Preferably, (B) the thermoplastic resin is compatible with (A) the aromatic polycarbonate. Furthermore, considering transparency, (B) the thermoplastic resin preferably has a refractive index of 1.56 or less at a wavelength of 589 nm, and it is more preferably a thermoplastic resin that is compatible with the aromatic polycarbonate and that has a refractive index of 1.56 or less at a wavelength of 589 nm.

Moreover, the refractive index of (B) the thermoplastic resin used in the present invention is preferably lower than the refractive index of (A) the aromatic polycarbonate, and is 1.56 or less at a wavelength of 589 nm, where "nab" representing the refractive index of the resin blend component of (A) and (B) at a wavelength of 589 nm and "nc" representing the refractive index of (C) the reinforcing filling material at a wavelength of 589 nm satisfy Formula i) below:

$$\text{Formula i)} \quad -0.008 \leq nab - nc \leq +0.008.$$

In such cases, the resulting resin sheet/film will have excellent surface smoothness as well as excellent bending characteristics, surface smoothness, transparency and adhesiveness. In particular, a molded article having such a size/thickness that cannot be filled by injection molding can be provided, which can favorably be used as a sheet used for thermal shaping for application to electronic/electric apparatus housings or the like.

According to the present invention, the refractive index at a wavelength of 589 nm can be determined by a method described in Examples below. The refractive index of (B) the thermoplastic resin at a wavelength of 589 nm is preferably in a range of 1.500-1.550, for the purpose of further enhancing transparency.

Examples of (B) the thermoplastic resin include acrylic resins, polyester resins and silicone resins. Among them, acrylic resins and semicrystalline and amorphous polyester resins are preferably used from the perspective of transparency and compatibility. Accordingly, (B) the thermoplastic resin preferably contains (B-1) an acrylic resin or (B-2) an aliphatic polyester resin.

[(B-1) Acrylic resin]

Examples of the acrylic resin highly compatible with (A) the aromatic polycarbonate used in the present invention include low-molecular-weight polymethyl methacrylate (PMMA) with a weight-average molecular weight of 20,000 or less, and polymethyl methacrylate (PMMA) with a high syndiotactic ratio. Among them, particularly a (meth)acrylate copolymer having an aromatic ring structure such as a phenyl group introduced into the side chain is preferably used for the purpose of enhancing compatibility with polycarbonate.

[(Meth)acrylate copolymer]

As described above, in one preferable embodiment, a (meth)acrylate copolymer contains an aromatic (meth)acrylate unit (b1) and a methyl methacrylate unit (b2).

According to the present invention, "(meth)acrylate" refers to either or both of "acrylate" and "methacrylate". Moreover, a "unit" refers to a structural part originating from a raw material monomer that is used upon producing a (meth)acrylate copolymer by copolymerizing the monomer.

Aromatic (meth)acrylate as a monomer constituting the aromatic (meth)acrylate unit (b1) refers to (meth)acrylate that has an aromatic group at the ester moiety. Examples of the aromatic (meth)acrylate include phenyl(meth)acrylate and benzyl(meth)acrylate. They may be used alone or two or more types of them may be used in combination. Among them, it is preferably phenylmethacrylate or benzylmethacrylate, and more preferably phenylmethacrylate. Since the (meth)acrylate copolymer has the aromatic (meth)acrylate unit (b1), transparency of the resin composition resulting after mixing with (A) the aromatic polycarbonate resin can be enhanced.

A monomer constituting the methyl methacrylate unit (b2) is methyl methacrylate.

The (meth)acrylate copolymer according to the present invention preferably contains an aromatic (meth)acrylate unit (b1) and a methyl methacrylate unit (b2) at a mass ratio (b1/b2) of 5-50/50-95, that is, 5-50% by mass of the aromatic (meth)acrylate unit (b1) and 50-95% by mass of the methyl methacrylate unit (b2) (provided that the total of (b1) and (b2) is 100% by mass). As long as the content of (b1) the aromatic (meth)acrylate unit in (B) the (meth)acrylate copolymer is 5% or higher by mass and the content of (b2) the methyl methacrylate unit is 95% or lower by mass, transparency can be maintained in a region highly added with (B) the (meth)acrylate copolymer. Meanwhile, as long as the content of the aromatic (meth)acrylate unit (b1) is 50% or lower by mass and the content of the methyl methacrylate unit (b2) is 50% or higher by mass, compatibility with (A) the aromatic polycarbonate resin should not be too high and migration to the surface of the molded article is not reduced, and thus the surface hardness is not reduced.

Furthermore, since high surface hardness can be expressed while further maintaining transparency in a region highly added with (B) the (meth)acrylate copolymer, (B) the (meth)acrylate copolymer preferably contains 10-30% by mass of the aromatic (meth)acrylate unit (b1) and 70-90% by mass of the methyl methacrylate unit (b2) (provided that the total of (b1) and (b2) is 100% by mass).

As long as the content of the aromatic (meth)acrylate unit (b1) in the (meth)acrylate copolymer is 10% or higher by mass and the content of the methyl methacrylate unit (b2) is 90% or lower by mass, compatibility with (A) the aromatic polycarbonate resin should not be too high and migration to the surface of the molded article is not reduced, and thus the surface hardness is not reduced. Meanwhile, as long as the content of the aromatic (meth)acrylate unit (b1) is 30% or lower by mass while the content of the methyl methacrylate unit (b2) is 70% or higher by mass, transparency can be maintained in a region highly added with the (meth)acrylate copolymer.

Moreover, the mass average molecular weight of the (meth)acrylate copolymer is 5,000-30,000, preferably 10,000-25,000, and particularly preferably 13,000-20,000. At a mass average molecular weight of 5,000-30,000, the

(meth)acrylate copolymer will have good compatibility with (A) the aromatic polycarbonate resin and will have excellent effect in enhancing the surface hardness.

The mass average molecular weight (Mw), the number average molecular weight (Mn) and the molecular weight distribution (Mw/Mn) of the (meth)acrylate copolymer can be determined by gel permeation chromatography using chloroform or tetrahydrofuran (THF) as a solvent. Here, a molecular weight is a value in terms of polystyrene (PS).

(B-2) Polyester resin

An example of the polyester resin that is highly compatible with (A) the aromatic polycarbonate used in the present invention include alicyclic polyester resins. For example, it is obtained by carrying out esterification or transesterification of a dicarboxylic acid component and a diol component and, optionally, a small amount of additional component, followed by polycondensation. The dicarboxylic acid component contains alicyclic dicarboxylic acid or an ester-forming derivative thereof as the main component. Furthermore, the diol component contains alicyclic diol as the main component. Herein, a "main component" refers to a component that accounts, for example, for 80 mol% or more of the dicarboxylic acid component or the diol component.

The alicyclic dicarboxylic acid or the ester-forming derivative thereof is not particularly limited as long as two carboxyl groups are bound to the alicyclic structure. Specifically, examples include 1,2-cyclohexane dicarboxylic acid, 1,3-cyclohexane dicarboxylic acid, 1,4-cyclohexane dicarboxylic acid, 1,4-decahydronaphthalene dicarboxy acid, 1,5-decahydronaphthalene dicarboxy acid, 2,6-decahydronaphthalene dicarboxy acid, 2,7-decahydronaphthalene dicarboxy acid and ester-forming derivatives thereof.

Among them, it is preferably alicyclic dicarboxylic acid with a carbon number of 6-12 or an ester-forming derivative thereof, more preferably 1,4-cyclohexane dicarboxylic acid or an ester-forming derivative thereof, and still more preferably 1,4-cyclohexane dicarboxylic acid. An alicyclic dicarboxylic acid like 1,4-cyclohexane dicarboxylic acid is favorable in that it costs less than an ester-forming derivative thereof.

In a case where 1,4-cyclohexane dicarboxylic acid is used, the trans/cis ratio thereof is preferably 80/20-100/0, more preferably 85/15-100/0, still more preferably 90/10-100/0, and particularly preferably 95/5-100/0. Within this range, heat resistance of the resulting alicyclic polyester resin can be improved.

The dicarboxylic acid component of (B-2) the alicyclic polyester resin of the present invention contains 80 mol% or more and preferably 90 mol% or more of alicyclic dicarboxylic acid or an ester-forming derivative thereof with respect to the entire dicarboxylic acid component. Examples of other dicarboxylic acid component include aromatic dicarboxylic acid and aliphatic dicarboxylic acid. Specific examples include aromatic dicarboxylic acids such as terephthalic acid, phthalic acid, isophthalic acid, 1,4-phenylenedioxy dicarboxylic acid, 1,3-phenylenedioxy diacetic acid, 4,4-diphenyl dicarboxylic acid, 4,4'-diphenylether dicarboxylic acid, 4,4-diphenylketone dicarboxylic acid, 4,4'-diphenoxyethane dicarboxylic acid, 4,4-diphenylsulfone dicarboxylic acid and 2,6-naphthalene dicarboxylic acid, succinic acid, glutaric acid, adipic acid, pimelic acid, suberic acid, azelaic acid, sebacic acid, undecadicarboxylic acid and dodecadicarboxylic acid, and alkyl esters with a carbon number of 1-4 or halides thereof.

The alicyclic diol component is not particularly limited as long as two hydroxyl groups are bound to the alicyclic structure. It is preferably alicyclic diol having two hydroxyl groups bound to a 5-membered ring or a 6-membered ring. By using alicyclic diol with a 5-membered ring or a 6-membered ring, heat resistance of the resulting polyester resin can be enhanced.

Examples of such alicyclic diol include 5-membered ring diols such as 1,2-cyclopentanedimethanol, 1,3-cyclopentanedimethanol, bis(hydroxymethyl)tricyclo, and [5.2.1.0]decane, as well as 6-membered ring diols such as 1,2-cyclohexane diol, 1,3-cyclohexane diol, 1,4-cyclohexane diol, 1, 2-cyclohexane dimethanol, 1,3-cyclohexane dimethanol, 1,4-cyclohexane dimethanol and 2,2-bis(4-hydroxycyclohexyl)-propane. Among them, it is preferably 1,2-cyclohexane dimethanol, 1,3-cyclohexane dimethanol or 1,4-cyclohexane dimethanol, and more preferably 1,4-cyclohexane dimethanol. 1,4-Cyclohexane dimethanol has advantages in that it has high reactivity owing to the methylol group at the para-position, it is likely to result in a high-polymerization degree polyester, it can result in a polyester resin with a high glass transition temperature, and it can easily be obtained for being available as an industry product. The trans/cis ratio of 1,4-cyclohexane dimethanol is preferably within a range of 60/40-100/0.

In the present invention, the diol component contains 80 mol% or more and preferably 90 mol% or more of alicyclic diol like those mentioned above with respect to the entire diol component. Examples of other diol component include aliphatic diol, aromatic diol and the like. When alicyclic diol is less than 80 mol%, compatibility with the aromatic polycarbonate resin is deteriorated, transparency is reduced and further heat resistance may be poor.

Specific examples of other diol components include aliphatic diols such as ethylene glycol, propylene glycol, butanediol, pentanediol and hexanediol, and aromatic diols such as xylylene glycol, 4,4-dihydroxybiphenyl, 2,2-bis(4'-hydroxyphenyl)propane, bis(4-hydroxyphenyl)sulfone and bis(4-$\beta$-hydroxyethoxyphenyl)sulfonic acid.

According to a preferable embodiment of the present invention, (B-2) the aliphatic polyester resin used is preferably one obtained by polycondensating 1,4-cyclohexane dicarboxylic acid as the dicarboxylic acid component and

1,4-cyclohexane dimethanol as the diol. Thus, according to one embodiment, (B-2) the aliphatic polyester resin is polycyclohexane dimethanol-cyclohexane dicarboxylate (PCC).

Moreover, (B-2) the alicyclic polyester resin of the present invention may also contain a small amount of a copolymerization component other than the above-described diol component and dicarboxylic acid component. As such copolymerization component, a hydroxycarboxylic acid such as glycolic acid, p-hydroxybenzoic acid or p-β-hydroxyethoxybenzoic acids, a monofunctional component such as alkoxycarboxylic acid, stearyl alcohol, benzyl alcohol, stearic acid, behenic acid, benzoic acid, tert-butylbenzoic acid or benzoylbenzoic acid, or a polyfunctional component that is trifunctional or higher, such as tricarballylic acid, trimellitic acid, trimesic acid, pyromellitic acid, naphthalene tetracarboxylic acid, gallic acid, trimethylolethane, trimethylolpropane, glycerol, pentaerythritol or sugar ester, or the like may be used. These components are preferably 10 mol% or less with respect to Component B.

According to the present invention, the ratio of the dicarboxylic acid component and the diol component used upon esterification or transesterification is such that the total amount of the diol component is 1-2 times greater than the total amount of the dicarboxylic acid component in terms of molar ratio. In particular, when 1,4-cyclohexane dimethanol or the like that has a high boiling point is mainly used as the diol component, it is preferably 1-1.2 times greater than the dicarboxylic acid component in terms of molar ratio.

According to the present invention, the intrinsic viscosity of (B-2) the alicyclic polyester resin is preferably 0.4-1.5 dl/g, more preferably 0.5-1.3 dl/g, still more preferably 0.6-1.5 dl/g, and particularly preferably 0.7-1.4 dl/g. While setting the intrinsic viscosity to 0.4 dl/g or more can enhance the mechanical strength, setting the intrinsic viscosity to 1.5 dl/g or less can further enhance mobility and easiness in shaping. Moreover, if necessary, the intrinsic viscosity of the resulting polyester resin can further be increased by performing solid phase polymerization.

Here, the intrinsic viscosity can be determined by measuring with a Ubbelohde viscometer at 30°C using a phenol/tetrachloroethane ethane (weight ratio 1/1) mixture solution as a solvent.

The terminal carboxylic acid concentration of (B-2) the alicyclic polyester resin of the present invention is preferably 70 μeq/g or less, more preferably 40 μeq/g or less, still more preferably 30 μeq/g or less, and particularly preferably 10 μeq/g or less. A terminal carboxylic acid concentration of 70 μeq/g or less is preferable since moist heat resistance of the resin composition of the present invention is likely to be further enhanced.

Here, the terminal acid value can be controlled during production described later, for example, by controlling the ratio of 1,4-cyclohexane dicarboxylic acid and 1,4-cyclohexane dimethanol as the raw materials, or by using alkylene diol, in particular alkylene diol with a carbon number of 2-10, as the diol raw material in combination.

For example, in a case of an alicyclic polyester resin in which 1,4-cyclohexane dicarboxylic acid is mainly used as the dicarboxylic acid component and 1,4-cyclohexane dimethanol is mainly used as the diol component, the melting point of (B-2) the alicyclic polyester resin of the present invention is preferably 200-250°C, more preferably 210-230°C, and still more preferably 215-230°C.

1,4-Cyclohexane dicarboxylic acid as a raw material of an alicyclic polyester resin used in the present invention preferably has higher light transmittance at a wavelength of 340 nm, considering the light transmittance of the resulting alicyclic polyester resin. If this light transmittance is too low, the YI value of the resulting alicyclic polyester resin is increased, and the light transmittance of the alicyclic polyester resin tends to be low. Specifically, this light transmittance as measured by the following method (hereinafter, sometimes abbreviated as T-340) is preferably 85% or more, and more preferably 87% or more.

T-340 is light transmittance at a wavelength of 340 nm, which is obtained by placing a 2N potassium hydroxide solution into a quartz cell having an optical path length of 10 mm to perform zero correction, and then placing a solution obtained by dissolving 5.0 g of 1,4-cyclohexane dicarboxylic acid per 50 ml of 2N potassium hydroxide solution into the quartz cell having an optical path length of 10 mm to measure the solution using a photoelectric spectrophotometer.

As a raw material of the alicyclic polyester resin used in the present invention, a raw material 1,4-cyclohexane dicarboxylic acid having 90 mol% or more of trans form may be produced, for example, by a thermal isomerization method of a cis form or a mixture of a cis form and a trans form of 1,4-cyclohexane dicarboxylic acid. According to a known crystallization method that utilizes difference in solubility into water between the cis form and the trans form, T-340 of the resulting 1,4-cyclohexane dicarboxylic acid is low and thus the light transmittance of the resulting alicyclic polyester resin is insufficient. Accordingly, a thermal isomerization method is favorable in that it is preferable to use 1,4-cyclohexane dicarboxylic acid whose trans form proportion is 90 mol% or more and T-340 is 85% or higher.

The above-described thermal isomerization can be carried out by subjecting a mixture of cis-1,4-cyclohexane dicarboxylic acid and trans-1,4-cyclohexane dicarboxylic acid, or cis-1,4-cyclohexane dicarboxylic acid to heat treatment in an inert atmosphere within a temperature range of 180°C or higher but less than the melting point of trans-1,4-cyclohexane dicarboxylic acid. According to the present invention, the melting point of trans-1,4-cyclohexane dicarboxylic acid refers to a melting point of trans-1,4-cyclohexane dicarboxylic acid under the actual isomerization reaction conditions.

Furthermore, the alicyclic polyester resin used in the present invention may be made into pellets and then, if necessary, subjected to solid phase polymerization to further increase the intrinsic viscosity.

The alicyclic polyester resin used in the present invention, in which 80 mol% or more of the diol unit is 1,4-cyclohexane dimethanol is preferable in terms of heat resistance of the polyester resin.

Specifically, an alicyclic polyester resin in which 80 mol% or more but 99.5 mol% or less of the diol unit is a 1,4-cyclohexane dimethanol unit and 0.5 mol% or more but 20 mol% or less is an alkylene diol unit with a carbon number of 2-10 is preferable, and an alicyclic polyester resin in which a 1,4-cyclohexane dimethanol unit is 90 mol% or more to 99.5 mol% or less while an alkylene diol unit with a carbon number of 2-10 is 0.5 mol% or more to 10 mol% is more preferable due to higher hydrolysis resistance.

When (B-2) a polyester resin is contained as a resin component, transesterification preventing agent described later is preferably contained. In this case, transesterification upon melt-kneading the resin composition can be suppressed, by which coloring can be suppressed and impact strength can be enhanced.

<Blending amount>

While the content of (B) the thermoplastic resin largely depends on the refractive index of (B), it is preferable that 60-90 pts. mass of (A) the aromatic polycarbonate and 10-40 pts. mass of (B) the thermoplastic resin are contained with respect to 100 pts. mass of the total of (A) and (B), that is, (A)/(B) (mass ratio) = 60/40 to 90/10, in order not to greatly impair the physical properties of polycarbonate.

[(C) Reinforcing filling material]

The aromatic polycarbonate resin composition of the present invention and a film/sheet made therefrom comprise (C) a reinforcing filling material (hereinafter, sometimes referred to as "Component (C)") in order to enhance the bending characteristics such as bending elastic modulus and bending strength of the molded article. Herein, a "filling material" and a "filler" are synonymous.

The (C) reinforcing filling material used in the present invention is preferably at least one type selected from glass-based reinforcing materials and carbon-based reinforcing materials, and particularly preferably a glass-based reinforcing material, due to excellent reinforcing effect on the aromatic polycarbonate resin composition and the film/sheet resulting therefrom. These filling materials are classified into (c-1) a fibrous filling material or (c-2) a plate-like filling material according to their shapes. Specifically, in the present invention, (C) the reinforcing filling material comprises at least(c-1) a fibrous filler with a fiber length of 5 mm or less and a flat or elliptic cross-sectional shape.

<Glass-based reinforcing material>

The glass composition of the glass reinforcing material used in the present invention is not particularly limited, and a glass composition such as A-glass, C-glass, E-glass or the like can be used. In particular, E-glass, i.e., alkali-free glass having the following component composition, is preferable since it does not have an adverse effect on heat stability of (A) the aromatic polycarbonate resin and it can suppress reduction in molecular weight of (A) the aromatic polycarbonate resin.

(E-glass composition: % by mass)

$SiO_2$: 52-56
$Al_2O_3$: 12-16
$Fe_2O_3$: 0-0.4
CaO: 16-25
MgO: 0-6
$B_2O_3$: 5-13
$TiO_2$: 0-0.5
$R_2O$ ($Na_2O$ + $K_2O$): 0-0.8

As the glass reinforcing filling material according to the present description, glass fibers as typified by "chopped strands" equally cut into a length of about 1-10 mm and "milled fibers" milled to a length of about 10-500 μm can be used as (c-1) the fibrous filler while a plate-like glass material as typified by glass flakes can be used as (c-2) the plate-like filler, from the perspective of reinforcing effect and transparency of the aromatic polycarbonate resin composition.

Such glass reinforcing filling material may be surface-treated with a surface treatment agent such as Component (D) or the like described later, where such surface treatment enhances adhesiveness between the resin component and the glass reinforcing filling material, thereby realizing high mechanical strength.

Examples of (c-1) the glass fiber-like filling material (fibrous glass fiber) include chopped strands and roved glass. The glass fiber of any known form can be used regardless of the form of the glass fiber upon blending the resin component, and the glass fiber (long fiber) masterbatch and the like. The chopped strands (chopped glass fiber) is

preferable according to the present invention from the perspective of productivity.

The glass fiber chopped strands are glass fibers (strands) made of several-tens to several-thousands of glass monofilaments (filaments) bundled and cut into a predetermined length, where the fiber cut at right to the longitudinal direction of the glass fiber usually has a perfect circle, elliptic, flat or polygonal cross-sectional shape. Among them, those with an elliptic or flat cross-sectional shape are preferably used in terms of warping of the sheet, surface smoothness and flexural property. Accordingly, in the present invention, (C) the reinforcing filling material contains (c-1) a fibrous filler, where the fiber of (c-1) the fibrous filler has a flat or elliptic cross-sectional shape.

Preferably used glass fiber chopped strands have a nearly columnar shape such as a cylindrical or prismatic shape, whose average fiber diameter is 1-25 μm and in particular 8-15 μm, and an average fiber length in the long axis direction is preferably 2-5 mm.

With chopped strands having an average fiber diameter of less than 1 μm, it is likely that the bulk density is small, the uniform dispersibility of the glass fiber is decreased, and the moldability is impaired. On the other hand, if the average fiber diameter is 25 μm or more, it is likely that the appearance of the molded article is impaired, and the reinforcing effect is poor. Furthermore, if the average fiber length is too short, the reinforcing effect may be insufficient whereas if the average fiber length is too long, workability upon kneading and moldability may be impaired, which are unfavorable.

[(c-1) Flat-shaped cross-sectional glass fiber]

In the present invention, a fibrous filling material contains (c-1) a fibrous filler whose fiber has a flat cross-sectional shape (hereinafter, also referred to as "flat-shaped cross-sectional glass fiber" or "flat cross-sectional glass fiber"). The flat-shaped cross-sectional glass fiber has, for example, an average longer diameter of the fiber cross section of 10-50 μm, and an average ratio of the longer diameter and the shorter diameter (longer diameter/shorter diameter) of 1.5-8. By using such glass fiber, mobility, rigidity, low warpage, impact resistance and low anisotropy of the polycarbonate resin composition of the present invention and a film/sheet made therefrom can effectively be enhanced.

The average longer diameter of the fiber cross section of the flat cross-sectional glass fiber of the present invention is usually 10-50 μm, preferably 15-40 μm, more preferably 20-35 μm, still more preferably 24-30 μm, and particularly preferably 25-30 μm.

Moreover, the average ratio value of the longer diameter and the shorter diameter (longer diameter/shorter diameter) (flatness ratio) is preferably 1.6-7, more preferably 1.7-6, and still more preferably 1.8-5. By using a flat cross-sectional glass fiber having an average ratio of the longer diameter and the shorter diameter (longer diameter/shorter diameter) (aspect ratio) within such a range, mobility, low warpage and impact resistance of the polycarbonate resin of the present invention can be enhanced while reducing anisotropy.

The cross-sectional shape of the flat cross-sectional glass fiber used in the present invention comprises, in addition to a flat cross section, an ellipse shape. A flat shape or an ellipse shape is preferable from the perspective of mechanical strength, low warpage and anisotropy.

Meanwhile, the ratio (aspect ratio) of an average fiber length and an average fiber diameter of the flat cross-sectional glass fiber is usually 2-120, preferably 2.5-70, and more preferably 3-50. If the ratio (aspect ratio) of an average fiber length and an average fiber diameter of the flat cross-sectional glass fiber is less than 2, the mechanical strength is likely to be decreased, whereas if it exceeds 120, it is likely that warpage and anisotropy are increased while appearance of the molded article is significantly deteriorated.

An average fiber diameter (diameter) of such flat cross-sectional glass fiber refers to a number average fiber diameter (diameter) obtained by converting the flat cross-sectional shape into a perfect circle shape having an identical area. An average fiber length and an average fiber diameter of a fibrous filling material other than the flat cross-sectional glass fiber are also calculated by a similar method. Specifically, an average fiber diameter refers to a number average fiber diameter (diameter) obtained by converting the cross-sectional shape into a perfect circle shape having an identical area. An average fiber length refers to a number average value of the length in the long axis direction of the fiber. A number average fiber length and a number average fiber diameter are calculated with an image analyzer based on an image of a filling material residue observed with an optical microscope, where the residue is collected by treatments including ashing of the molded article at a high temperature, dissolution with a solvent, decomposition with chemicals, and else. According to this calculation, fiber with a length that is shorter than the fiber diameter is not counted. Herein, the longer diameter and the shorter diameter of the fiber cross section of flat cross-sectional glass fiber can be determined from an image of the cross section of the glass fiber that is observed with a scanning-type electronic microscope (SEM). Specifically, in the observed image as shown in Figure 1, the length of the longer diameter A and the length of the shorter diameter B are calculated based on the longer side Ra and shorter side Rb of rectangle R, respectively, that circumscribes to the cross section of the flat glass fiber (transverse cross section S) to determine their number averages. A number average fiber diameter, a number average fiber length, a number average longer diameter and a number average shorter diameter of a fibrous filling material refer to number average values of arbitrarily selected 1000 fibers.

Glass fiber chopped strands of the present invention may be surface-treated with a surface treatment agent such as Component (D) described later. With such a surface treatment, the monofilaments can be bundled, lubricity can be imparted to the surface of the fibers, damage on the surface of the fibers can be prevented, adhesiveness between the glass fiber and the resin component can be enhanced, and high mechanical strength can be achieved.

Glass-fiber-milled fibers are obtained by grinding the above-described glass fiber (strand), and have a nearly columnar shape such as a cylindrical or prismatic shape, where the average fiber diameter is 1-25 μm and preferably 5-15 μm and the average fiber length is 1-500 μm, preferably 10-300 μm and more preferably 20-200 μm.

With short milled fibers having an average fiber diameter of less than 1 μm, it is likely that the moldability is impaired, whereas if an average fiber diameter is as large as 25 μm or more, it is likely that the appearance of the molded article is impaired and the reinforcing effect is insufficient.

These milled fibers can also be surface-treated with a surface treatment agent such as Component (D) described later so that adhesiveness with the resin component can be improved and the mechanical properties of the resin composition can further be enhanced.

Glass flakes according to the present description are scale-like glass powder which usually has an average particle diameter of 10-4000 μm, an average thickness of 0.1-10 μm, and an aspect ratio (average maximum diameter/average thickness ratio) of about 2-1000. The glass flakes according to the present description preferably have an average particle diameter of 2000 μm or less and particularly 100-1500 μm, an average thickness of 0.1-10 μm and particularly 0.4-6 μm, and an aspect ratio of 10-800 and particularly 50-600.

Since glass flakes having an average particle diameter that exceeds 2000 μm cause classification upon blending each component of the resin composition, it is likely that uniform dispersion with the resin components becomes difficult and spot patterns appear on the molded article. On the other hand, if an average particle diameter is too small, the reinforcing effect may be insufficient. Moreover, if an average thickness is too thin, crushing is likely to be caused during kneading due to lack of strength whereas if an average thickness is too thick, the reinforcing effect may be insufficient or moldability may be impaired, which are unfavorable.

Similar to the case of glass fibers, these glass flakes can also be surface-treated with a surface treatment agent such as Component (D) described later to improve adhesiveness with the resin component.

According to the present description, a particle size of a plate-like filling material such as glass flakes refers to a length corresponding to the farthest distance between two parallel plates sandwiching the granular glass or glass flake. In addition, an average particle diameter and an average thickness of a plate-like filling material can be determined by spreading the plate-like filling material on glass so that they do not overlap each other as much as possible, observing and photographing them with an optical microscope at a magnification of 40-100x, measuring the maximum length and the like for each of the randomly selected 1000 plate-like filling material with a caliper, and determining the addition average values. In a case of a commercially available product, catalog values can be employed as these values.

According to the present invention, the glass reinforcing material may be used alone or two or more types of them may be used as a mixture. For example, two or more types of glass fibers (including milled fibers) having different average fiber diameters, average lengths and the like can be used in combination, one or more types of glass fibers (including milled fibers) may be used in combination, or one or more types of flakes and one or more types of glass fibers (including milled fibers) may be used in combination.

For the purpose of dimensional stabilization, spherical glass beads can also be used in combination without departing from the scope of the present invention for improving shrinkage anisotropy, and improving warping of the sheet and the thermally shaped product thereof.

<Carbon-based reinforcing material>

As a carbon-based reinforcing material, carbon fibers, carbon nanotubes or the like may be used as (c-1) a fibrous filler while graphite or the like can be used as (c-2) a plate-like filler, among which carbon fibers and graphite are preferable.

Among the carbon-based reinforcing materials, fibrous carbon-based reinforcing materials such as carbon fibers preferably have an average fiber diameter of 1-25 μm and particularly 7-15 μm, and an average fiber length of preferably 2-5 mm in the long axis direction.

If the average fiber diameter is less than 1 μm, it is likely that the bulk density is small, the uniform dispersibility is decreased, and the moldability is impaired. On the other hand, if the average fiber diameter is larger than 25 μm, it is likely that the appearance of the molded article is impaired, and the reinforcing effect is insufficient. Furthermore, if the average fiber length is too short, the reinforcing effect may be insufficient whereas if the average fiber length is too long, workability upon kneading and moldability may be impaired, which are unfavorable.

Usually, a plate-like (flake-like) carbon-based reinforcing material such as graphite preferably has an average particle diameter of 10-4000 μm, an average thickness of several μm, and an aspect ratio (average maximum diameter/average thickness ratio) of about 2-200. Preferably, it has an average particle diameter of 2000 μm or less, particularly

500-1500 μm, an average thickness of 1-10 μm, particularly 2-6 μm, and an aspect ratio of 10-180, particularly 50-150. Since those with an average particle diameter exceeding 2000 μm cause separation upon blending each component of the resin composition, it is likely that uniform dispersion with the resin component becomes difficult, and spot patterns are generated in the molded article. On the other hand, if an average particle diameter is too small, the reinforcing effect will be insufficient. Moreover, if an average thickness is too thin, crushing is likely to be caused during kneading due to lack of strength whereas if an average thickness is too thick, the reinforcing effect may be insufficient or moldability may be impaired, which is unfavorable.

According to the present invention, a particle size of a carbon-based reinforcing material refers to a length corresponding to the farthest distance between two parallel plates sandwiching the carbon-based reinforcing material. In addition, an average fiber diameter, an average fiber length, an average particle diameter and an average thickness can be determined by spreading the carbon-based reinforcing material on glass so that they do not overlap each other as much as possible, observing and photographing them with an optical microscope at a magnification of 40-100x, measuring the maximum diameter, length and the like for each of the randomly selected 1000 carbon-based reinforcing material with a caliper, and determining the addition average values. In a case of a commercially available product, catalog values can be employed as these values.

According to the present invention, the carbon-based reinforcing material may be used alone or two or more types of them may be used as a mixture. For example, two or more types of carbon-based reinforcing materials having different materials, average particle diameters or shapes may be used in combination.

<Other reinforcing materials>

In addition to the above-described reinforcing materials, silicate-based reinforcing materials can also be used in the present invention. Wollastonite or the like can be used as (c-1) the fibrous filler. Talc, mica or the like may be used as (c-2) the plate-like filler. Additionally, metal fibers, and whiskers such as potassium titanate whiskers, calcium carbonate whiskers, aluminum borate whiskers, titanium oxide whiskers, zinc oxide whiskers or magnesium sulfate whiskers can be used as other fibrous filler while metal flakes, silica, alumina, calcium carbonate or the like can be used as a plate-like filler. These other reinforcing materials may similarly be used alone or two or more types of them may be used as a mixture.

<Blending amount>

In one embodiment of the present invention, an aromatic polycarbonate resin sheet/film contains 20-60 pts. mass of (C) a reinforcing filling material with respect to a total of 100 pts. mass of (A) the aromatic polycarbonate and (C) the reinforcing filling material. In other words, (A)/(C) (mass ratio) is in a range of 80/20-40/60. If the content of (C) the reinforcing filling material is less than the above-mentioned lower limit, the effect of enhancing strength by blending (C) the reinforcing filling material may not adequately be achieved, whereas if the content is more than the above-mentioned upper limit, the surface smoothness is likely to be impaired. More preferably, (A)/(C) (mass ratio) is in a range of 80/20-50/50, and still more preferably in a range of 80/20-60/40.

In one embodiment of the present invention, (C) 5-45 pts. mass of a reinforcing filling material is contained with respect to 100 pts. mass of a resin component that contains (A) 60-90 pts. mass of an aromatic polycarbonate and (B) 10-40 pts. mass of a thermoplastic resin that is compatible with the aromatic polycarbonate and having a refractive index of 1.56 or less at a wavelength of 589 nm. In other words, (A+B)/(C) (mass ratio) is in a range of 100/5-100/45. If the content of (C) the reinforcing filling material is less than the above-mentioned lower limit, the effect of enhancing strength by blending (C) the reinforcing filling material may not adequately be achieved, whereas if the content is more than the above-mentioned upper limit, it is likely that the surface smoothness is impaired and transparency is decreased. More preferably, (A+B)/(C) (mass ratio) is in a range of 100/10-100/40, and still more preferably in a range of 100/15-100/35.

[(D) Surface treatment agent]

The aromatic polycarbonate resin sheet/film of the present invention may additionally contain (D) a surface treatment agent (hereinafter, sometimes referred to as "Component (D)"), particularly in order to enhance adhesiveness between (C) the reinforcing filling material and the resin component, and, in a case where (C) a reinforcing filling material, such as a glass reinforcing material or a silicate-based reinforcing material, that has the effect of promoting decomposition of (A) the aromatic polycarbonate resin is used, to suppress this decomposition promoting effect. Since a commercially available glass reinforcing material such as glass fibers or glass flakes is usually already treated with such (D) a surface treatment agent, there is no need of additionally blending (D) a surface treatment agent when such a surface-treated reinforcing material is used.

The carbon-based reinforcing material also has no problem of deteriorating (A) the aromatic polycarbonate

resin, it may not be blended with (D) the surface treatment agent.

Blending of (D) the surface treatment agent is not limited to surface treatment of a reinforcing material in advance, and a surface treatment agent may be added as a raw material upon preparing a resin composition.

As (D) the surface treatment agent, (D-1) an organic silane compound and/or (D-2) a silicone compound represented by Formula (1) below can be used.

$$(R^1O)_pSiR^2_{4-p} \cdots \qquad (1)$$

(wherein, $R^1$ and $R^2$ each represent an organic group, and p represents an integer of 1-4).

The organic groups represented by $R^1$ and $R^2$ may be aliphatic, aromatic or alicyclic hydrocarbon groups. These hydrocarbon groups may have an ethylenically unsaturated bond, may include an ether bond or an ester bond inside, and may additionally have a reactive functional group such as an epoxy group or an amino group.

Preferably, $R^1$ is an aliphatic hydrocarbon group having a carbon number of 1-4, $R^2$ is an aromatic or alicyclic hydrocarbon group having a carbon number of 6-12, an aliphatic hydrocarbon group having a carbon number of 1-12, a hydrocarbon group having an ethylenically unsaturated bond with a carbon number of 2-16, or a hydrocarbon group having an epoxy group with a carbon number of 3-15. Particularly preferably, $R^1$ is an aliphatic hydrocarbon group having a carbon number of 1-4, and $R^2$ is an aliphatic hydrocarbon group having a carbon number of 1-12.

This (D-1) organic silane compound preferably has one or more of each of $R^1$ and $R^2$, and thus p is preferably 1-3.

Examples of the aromatic or alicyclic hydrocarbon group having a carbon number of 6-12 include a phenyl group and a cyclohexyl group; examples of the aliphatic hydrocarbon group having a carbon number of 1-12 include a methyl group, an ethyl group, a propyl group, a butyl group, an isobutyl group and a decyl group; examples of the hydrocarbon group having an ethylenically unsaturated bond with a carbon number of 2-16 include a vinyl group, an allyl group, an isopropenyl group, a butenyl group and further those having an ester bond inside such as a methacryloxypropyl group and an acryloxypropyl group; and examples of a hydrocarbon group having an epoxy group with a carbon number of 3-15 include a 3,4-epoxycyclohexyl group and a glycidoxypropyl group.

Specific examples of (D-1) the organic silane compound used in the present invention include trimethylsilane, trimethoxysilane, methyltrimethoxysilane, octyltrimethoxysilane, decyltrimethoxysilane, dimethyldimethoxysilane, methyltriethoxysilane, trimethylmethoxysilane, isobutyltrimethoxysilane, vinyltrimethoxysilane, vinyltriethoxysilane, vinyltris(β-methoxyethoxy)silane, β-(3,4-epoxycyclohexyl)ethyltrimethoxysilane, γ-glycidoxypropyltrimethoxysilane, γ-glycidoxypropylmethyldiethoxysilane, γ-glycidoxypropyltriethoxysilane, γ-methacryloxypropylmethyldimethoxysilane, γ-methacryloxypropyltrimethoxysilane and phenyltrimethoxysilane.

These (D-1) organic silane compounds may be used alone or two or more types of them may be used in combination.

(D-2) The silicone compound used in the present invention may be any of polyorganohydrogensiloxanes and organopolysiloxanes. Moreover, the molecular weight of (D-2) the silicone compound is not particularly limited and may belong to either oligomer or polymer group. More specifically, polyorganohydrogensiloxanes represented by Formula (*i*) to Formula (*ha*) shown in Japanese Examined Patent Application Publication No. *Showa* 63-26140, and hydrocarbonoxysiloxanes represented by the formula shown in Japanese Examined Patent Application Publication No. *Showa* 63-31513 and the like are preferable. Preferably, a silicone compound used as Component (D) is selected from polyorganohydrogensiloxanes. For example, a polysiloxane having repeating units represented by Formula (2) below, or a compound represented by Formula (3) or (4) below is preferably used.

$$(R)_\alpha(H)_\beta\ SiO \cdots \qquad (2)$$

(wherein, R represents a linear or branched alkyl group having a carbon number of 1-10, and the total of α and β is 2)

[Chemical Formula 3]

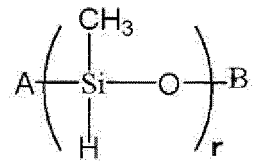

··· (3)

(wherein, A and B each represent a group selected from the following groups, and r represents an integer of 1-500)

[Chemical Formula 4]

A : 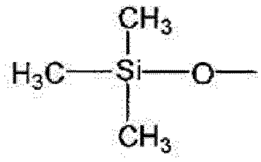 , 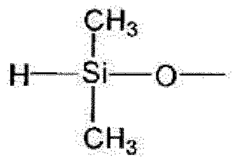

B : 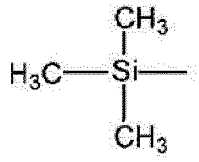 , 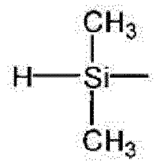

[Chemical Formula 5]

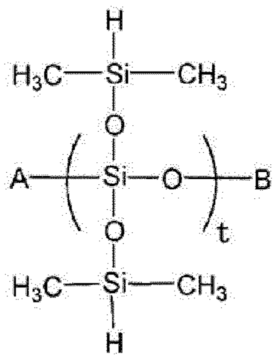 ··· (4)

(wherein, A and B are synonymous with those in Formula (3) above, respectively, and t represents an integer of 1-50).

As (D-2) the silicone compound, a commercially available silicone oil, for example, SH1107 (product of Dow Corning Toray Co., Ltd.) can be used.

Such (D-2) silicone compounds may be used alone or two or more types of them may be used in combination.

Furthermore, according to the present invention, as (D) the surface treatment agent, one or more types of (D-1) organic silane compounds and one or more types of (D-2) silicone compounds can be used in combination.

In a case where the aromatic polycarbonate resin sheet/film of the present invention contains (D) a surface treatment agent, (D) the surface treatment agent is preferably contained in a range of 0.1-10% by mass, in particular 1-5% by mass with respect to (C) the reinforcing filling material.

(D) The surface treatment agent exerts functions of preventing deterioration of the resin component by covering the active point of the surface of (C) the reinforcing filling material, and further enhancing the mechanical properties by increasing adhesion between (C) the reinforcing filling material and the resin matrix. However, if the blending amount of (D) the surface treatment agent is too small, these effects cannot sufficiently be achieved, and thus heat stability, mechanical strength, hue, heat resistance and moist heat resistance of the resulting resin composition are also decreased. On the other hand, if the blending amount of (D) the surface treatment agent is too large, gas is generated upon melt-kneading, which is likely to cause mold deposits.

Since (D-2) the silicone compound can generally exert the effects at a smaller amount than (D-1) the organic silane compound, if (D-2) a silicone compound is used as (D) the surface treatment agent, it is preferably used for 1-5% by mass with respect to (C) the reinforcing filling material.

[Other components]

In addition to the above-described resin component containing (A) an aromatic polycarbonate resin and optionally (B) the thermoplastic resin and the additional resin and (C) the reinforcing filling material, the aromatic polycarbonate resin sheet and film of the present invention may also contain additional components, if necessary. Examples

of additional components that may be contained in the aromatic polycarbonate resin sheet/film of the present invention include the following.

<Phosphorous-based heat stabilizer>

The aromatic polycarbonate resin sheet and film of the present invention may contain a phosphorous-based heat stabilizer. In general, a phosphorous-based heat stabilizer is effective in enhancing retention stability at a high temperature upon melt-kneading the resin component and heat resistance stability upon use of the resin molded article.

Examples of the phosphorous-based heat stabilizer used in the present invention include phosphorous acids, phosphoric acids, phosphite esters and phosphoric esters, among which phosphite esters that contain trivalent phosphorus, such as phosphites and phosphonites, are preferable in terms that they exert discoloration suppression effect.

Examples of phosphites include triphenyl phosphite, tris(nonylphenyl) phosphite, dilauryl hydrogen phosphite, triethyl phosphite, tridecyl phosphite, tris(2-ethylhexyl) phosphite, tris(tridecyl) phosphite, tristearyl phosphite, diphenyl monodecyl phosphite, monophenyl didecyl phosphite, diphenyl mono(tridecyl) phosphite, tetraphenyl dipropylene glycol diphosphite, tetraphenyl tetra(tridecyl)pentaerythritol tetraphosphite, hydrogenated bisphenol A phenol phosphite polymer, diphenyl hydrogen phosphite, 4,4'-butylidene-bis(3-methyl-6-tert-butylphenyl di(tridecyl)phosphite)tetra(tridecyl)4,4'-isopropylidenediphenyl diphosphite, bis(tridecyl)pentaerythritol diphosphite, bis(nonylphenyl)pentaerythritol diphosphite, dilauryl pentaerythritol diphosphite, distearyl pentaerythritol diphosphite, tris(4-tert-butylphenyl) phosphite, tris(2,4-di-tert-butylphenyl) phosphite, hydrogenated bisphenol A pentaerythritol phosphite polymer, bis(2,4-di-tert-butylphenyl)pentaerythritol diphosphite, bis(2,6-di-tert-butyl-4-methylphenyl)pentaerythritol diphosphite, 2,2'-methylenebis(4,6-di-tert-butylphenyl)octyl phosphite, and bis(2,4-dicumylphenyl)pentaerythritol diphosphite.

Examples of phosphonites include tetrakis (2,4-di-iso-propylphenyl)-4,4'-biphenylene diphosphonite, tetrakis (2,4-di-n-butylphenyl)-4,4'-biphenylene diphosphonite, tetrakis (2,4-di-tert-butylphenyl)-4,4'-biphenylene diphosphonite, tetrakis (2,4-di-tert-butylphenyl)-4,3'-biphenylene diphosphonite, tetrakis (2,4-di-tert-butylphenyl)-3,3'-biphenylene diphosphonite, tetrakis (2,6-di-iso-propylphenyl)-4,4'-biphenylene diphosphonite, tetrakis (2,6-di-n-butylphenyl)-4,4'-biphenylene diphosphonite, tetrakis (2,6-di-tert-butylphenyl)-4,4'-biphenylene diphosphonite, tetrakis (2,6-di-tert-butylphenyl)-4,3'-biphenylene diphosphonite, and tetrakis (2,6-di-tert-butylphenyl)-3,3'-biphenylene diphosphonite.

Examples of acid phosphates include methyl acid phosphate, ethyl acid phosphate, propyl acid phosphate, isopropyl acid phosphate, butyl acid phosphate, butoxyethyl acid phosphate, octyl acid phosphate, 2-ethylhexyl acid phosphate, decyl acid phosphate, lauryl acid phosphate, stearyl acid phosphate, oleyl acid phosphate, behenyl acid phosphate, phenyl acid phosphate, nonylphenyl acid phosphate, cyclohexyl acid phosphate, phenoxyethyl acid phosphate, alkoxypolyethylene glycol acid phosphate, bisphenol A acid phosphate, dimethyl acid phosphate, diethyl acid phosphate, dipropyl acid phosphate, diisopropyl acid phosphate, dibutyl acid phosphate, dioctyl acid phosphate, di-2-ethylhexyl acid phosphate, dioctyl acid phosphate, dilauryl acid phosphate, distearyl acid phosphate, diphenyl acid phosphate and bisnonylphenyl acid phosphate.

Among the phosphite esters, distearyl pentaerythritol diphosphite, tris(2,4-di-tert-butylphenyl) phosphite, bis(2,6-di-tert-butyl-4-methylphenyl)pentaerythritol diphosphite, 2,2'-methylenebis(4,6-di-tert-butylphenyl)octyl phosphite, and bis(2,4-dicumylphenyl)pentaerythritol diphosphite are preferable, and tris(2,4-di-tert-butylphenyl) phosphite is particularly preferable due to good heat resistance and less likelihood of hydrolysis.

These phosphorous-based heat stabilizers may be used alone or two or more types of them may be used in combination.

In a case where the aromatic polycarbonate resin sheet and film of the present invention contains a phosphorous-based heat stabilizer, the content thereof is generally 0.001 pts. mass or more, preferably 0.003 pts. mass or more and more preferably 0.005 pts. mass or more, and generally 0.1 pts. mass or less, preferably 0.08 pts. mass or less and more preferably 0.06 pts. mass or less, with respect to a total of 100 pts. mass of a resin component containing (A) an aromatic polycarbonate resin and optionally (B) a thermoplastic resin, and (C) a reinforcing filling material. If the content of the phosphorous-based heat stabilizer is less than the above-mentioned lower limit range, the heat stabilizing effect may be insufficient whereas if the content of the phosphorous-based heat stabilizer exceeds the above-mentioned upper limit range, the effect may reach the limit and may be no longer economical.

<Antioxidant>

If desired, the aromatic polycarbonate resin composition of the present invention preferably contain an antioxidant. An antioxidant can be contained to prevent hue deterioration and deterioration of mechanical properties upon heat retention.

Examples of an antioxidant include hindered phenol-based antioxidants. Specific examples of them include pentaerythritol tetrakis[3-(3,5-di-tert-butyl-4-hydroxyphenyl)propionate], octadecyl-3-(3,5-di-tert-butyl-4-hydroxyphenyl)propionate, thiodiethylene bis[3-(3,5-di-tert-butyl-4-hydroxyphenyl) propionate], N,N'-hexane-1,6-diylbis[3-(3,5-di-tert-butyl-4-hydroxyphenylpropionamide), 2,4-dimethyl-6-(1-methyl pentadecyl)phenol, diethyl[[3,5-bis(1,1-dimethylethyl)-4-hydroxyphenyl]methyl]phosphonate, 3,3',3",5,5',5"-hexa-tert-butyl-a,a',a"-(mesitylene-2,4,6-triyl)tri-p-cresol, 4,6-bis(octylthiomethyl)-o-cresol, ethylene bis(oxyethylene)bis[3-(5-tert-butyl-4-hydroxy-m-tolyl)propionate], hexamethylene bis[3-(3,5-di-tert-butyl-4-hydroxyphenyl)propionate], 1,3,5-tris(3,5-di-tert-butyl-4-hydroxybenzyl)-1,3,5-triazine-2,4,6(1H,3H,5H)-trione, and 2,6-di-tert-butyl-4-(4,6-bis(octylthio)-1,3,5-triazine-2-ylamino)phenol.

Among them, pentaerythritol tetrakis[3-(3,5-di-tert-butyl-4-hydroxyphenyl) propionate], and octadecyl-3-(3,5-di-tert-butyl-4-hydroxyphenyl)propionate are preferable. Examples of commercially available products of such phenol-based antioxidants include "IRGANOX 1010" and "IRGANOX 1076" manufactured by BASF as well as "ADK STAB AO-50" and "ADK STAB AO-60" manufactured by ADEKA.

These antioxidants may be contained alone or two or more types of them can be contained in any combination at any ratio.

In a case where the aromatic polycarbonate resin sheet/film of the present invention contains an antioxidant, the content thereof is generally 0.0001 pts. mass or more, preferably 0.001 pts. mass or more and more preferably 0.01 pts. mass or more, and also generally 3 pts. mass or less, preferably 1 pts. mass or less, more preferably 0.5 pts. mass or less and still more preferably 0.3 pts. mass or less, with respect to a total of 100 pts. mass of a resin component containing (A) an aromatic polycarbonate resin and optionally (B) a thermoplastic resin and (C) a reinforcing filling material. If the content of the antioxidant is less than the above-mentioned lower limit range, the effect as an antioxidant may be insufficient whereas if the content of the antioxidant exceeds the above-mentioned upper limit range, the effect may reach the limit and may be no longer economical.

<Other additives>

The aromatic polycarbonate resin sheet/film of the present invention may further contain various additives in a range that does not impair the effect of the present invention. Examples of such additives include a mold release agent, an ultraviolet light absorbent, a dye/pigment, an antistatic agent, a flame retardant, a drip inhibitor and an impact strength improving agent.

(Mold release agent)

The aromatic polycarbonate resin sheet/film of the present invention may contain a mold release agent, as which, a full esterification product of aliphatic alcohol and aliphatic carboxylic acid can favorably be used.

Examples of the aliphatic carboxylic acid constituting the full esterification product include saturated or unsaturated aliphatic monocarboxylic acids, dicarboxylic acids and tricarboxylic acids. Here, the aliphatic carboxylic acids also comprise alicyclic carboxylic acids. Among them, aliphatic carboxylic acids are preferably mono- or di-carboxylic acids with a carbon number of 6-36, and more preferably saturated aliphatic monocarboxylic acids with a carbon number of 6-36. Specific examples of such aliphatic carboxylic acids include palmitic acid, stearic acid, valeric acid, caproic acid, capric acid, lauric acid, arachic acid, behenic acid, lignoceric acid, cerotic acid, melissic acid, tetratriacontanoic acid, montanic acid, glutaric acid, adipic acid and azelaic acid.

Meanwhile, examples of the aliphatic alcohol component constituting the full esterification product include saturated or unsaturated monohydric alcohols and saturated or unsaturated polyhydric alcohols. These alcohols may have a substituent group such as a fluorine atom or an aryl group. Among these alcohols, saturated monohydric or polyhydric alcohols with a carbon number of 30 or less are preferable, and saturated aliphatic monohydric alcohols or polyhydric alcohols with a carbon number of 30 or less are more preferable. Here, aliphatic alcohols also comprise alicyclic alcohols.

Specific examples of such alcohols include octanol, decanol, dodecanol, stearyl alcohol, behenyl alcohol, ethylene glycol, diethylene glycol, glycerin, pentaerythritol, 2,2-dihydroxy perfluoropropanol, neopentylene glycol, ditrimethylol propane and dipentaerythritol.

The esterification rate of a full esterification product of the above-described aliphatic alcohol and the above-described aliphatic carboxylic acid does not necessarily have to be 100% as long as it is 80% or more. The esterification rate of the full esterification product of the present invention is preferably 85% or higher, and particularly preferably 90% or higher.

In particular, the full esterification product of the aliphatic alcohol and the aliphatic carboxylic acid used in the present invention preferably comprises one or more types of full esterification products of monoaliphatic alcohol and monoaliphatic carboxylic acid, and one or more types of full esterification products of polyaliphatic alcohol and monoaliphatic carboxylic acid. By using a full esterification product of monoaliphatic alcohol and monoaliphatic carboxylic acid, and a full esterification product of polyaliphatic alcohol and monoaliphatic carboxylic acid in combination, the mold-releasing effect can be enhanced, and generation of gas upon melt-kneading can be suppressed and thus an effect of reducing mold deposits can be achieved.

As the full esterification product of monoaliphatic alcohol and monoaliphatic carboxylic acid, a full esterification product of stearyl alcohol and stearic acid (stearyl stearate) or a full esterification product of behenyl alcohol and behenic acid (behenyl behenate) is preferable. As the full esterification product of polyaliphatic alcohol and monoaliphatic carboxylic acid, a full esterification product of glycerin serine and stearic acid (glycerin tristearate) and a full esterification product of pentaerythritol and stearic acid (pentaerythritol tetrastearate) are preferable, and pentaerythritol tetrastearate is particularly preferable.

The full esterification product of aliphatic alcohol and aliphatic carboxylic acid may contain aliphatic carboxylic acid and/or alcohol as impurities, and may be a mixture of multiple compounds.

In a case where the aromatic polycarbonate resin sheet/film of the present invention contains a mold release agent such as a full esterification product of aliphatic alcohol and aliphatic carboxylic acid, the content thereof is generally 2 pts. mass or less and preferably 1 pts. mass or less with respect to a total of 100 pts. mass of a resin component containing (A) an aromatic polycarbonate resin and optionally (B) a thermoplastic resin, and (C) a reinforcing filling material. If the content of the mold release agent is too large, there are problems such as decrease in hydrolysis resistance and die contamination upon injection molding.

When the full esterification product of monoaliphatic alcohol and monoaliphatic carboxylic acid and the full esterification product of polyaliphatic alcohol and monoaliphatic carboxylic acid are used in combination as a mold release agent, the proportions of use thereof (mass ratio) is preferably as follows so as to ensure the above-described effects to be achieved by combined use:

[Full esterification product of monoaliphatic alcohol and monoaliphatic carboxylic acid]: [Full esterification product of polyaliphatic alcohol and monoaliphatic carboxylic acid] = 1:1-10

(Ultraviolet light absorbent)

If desired, the aromatic polycarbonate resin sheet/film of the present invention preferably contains an ultraviolet light absorbent. By containing an ultraviolet light absorbent, weatherability of the aromatic polycarbonate resin sheet/film of the present invention can be enhanced.

Examples of the ultraviolet light absorbent include: inorganic ultraviolet light absorbents such as cerium oxide and zinc oxide; and organic ultraviolet light absorbents such as benzotriazole compounds, benzophenone compounds, salicylate compounds, cyanoacrylate compounds, triazine compounds, oxanilide compounds, malonate compounds and hindered amine compounds. Among them, organic ultraviolet light absorbents are preferable, and benzotriazole compounds are more preferable. By selecting an organic ultraviolet light absorbent, good mechanical properties of the aromatic polycarbonate resin sheet/film of the present invention can be achieved.

Specific examples of benzotriazole compounds include 2-(2'-hydroxy-5'-methylphenyl)benzotriazole, 2-[2'-hydroxy-3',5'-bis($\alpha$, $\alpha$-dimethylbenzyl) phenyl]-benzotriazole, 2-(2'-hydroxy-3',5'-di-tert-butyl-phenyl)-benzotriazole, 2-(2'-hydroxy-3'-tert-butyl-5'-methylphenyl)-5-chlorobenzotriazole, 2-(2'-hydroxy-3',5 '-di-tert-butyl-phenyl)-5-chlorobenzotriazole), 2-(2'-hydroxy-3',5'-di-tert-amyl)-benzotriazole, 2-(2'-hydroxy-5'-tert-octylphenyl)benzotriazole and 2,2'-methylene bis[4-(1,1,3,3-tetramethyl butyl)-6-(2N-benzotriazole-2-yl)phenol]. Among them, 2-(2'-hydroxy-5'-tert-octylphenyl)benzotriazole and 2,2'-methylene bis[4-(1,1,3,3-tetramethyl butyl)-6-(2N-benzotriazole-2-yl)phenol] are preferable, and 2-(2'-hydroxy-5'-tert-octylphenyl)benzotriazole is particularly preferable. Specific examples of such benzotriazole compounds include "SEESORB 701", "SEESORB 705", "SEESORB 703", "SEESORB 702", "SEESORB 704" and "SEESORB 709" manufactured by Shipro Kasei Kaisha, "BioSorb 520", "BioSorb 582", "BioSorb 580" and "BioSorb 583" manufactured by Kyodo Chemical, "KEMISORB 71" and "KEMISORB 72" manufactured by Chemipro Kasei, "CYASORB UV5411" manufactured by Cytec Industries, "LA-32", "LA-38", "LA-36", "LA-34" and "LA-31" manufactured by ADEKA, and "Tinuvin P", "Tinuvin 234", "Tinuvin 326", "Tinuvin 327" and "Tinuvin 328" manufactured by Ciba Specialty Chemicals.

Specific examples of benzophenone compounds include 2,4-dihydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-n-dodecyloxybenzophenone, bis(5-benzoyl-4-hydroxy-2-methoxyphenyl)methane, 2,2'-dihydroxy-4-methoxybenzophenone and 2,2'-dihydroxy-4,4'-dimethoxybenzophenone. Specific examples of such benzophenone compounds include "SEESORB 100", "SEESORB 101", "SEESORB 101S", "SEESORB 102" and "SEESORB 103" manufactured by Shipro Kasei Kaisha, "BioSorb 100", "BioSorb 110" and "BioSorb 130" manufactured by Kyodo Chemical, "KEMISORB 10", "KEMISORB 11", "KEMISORB 11S", "KEMISORB 12", "KEMISORB 13" and "KEMISORB 111" manufactured by Chemipro Kasei, "Uvinul 400" manufactured by BASF, "Uvinul M-40" manufactured by BASF, "Uvinul MS-40" manufactured by BASF, "CYASORB UV9", "CYASORB UV284", "CYASORB UV531" and "CYASORB UV24" manufactured by

Cytec Industries, and "ADK STAB 1413" and "ADK STAB LA-51" manufactured by ADEKA.

Specific examples of salicylate compounds include phenylsalicylate and 4-tert-butylphenylsalicylate. Specific examples of such salicylate compounds include "SEESORB 201" and "SEESORB 202" manufactured by Shipro Kasei Kaisha, and "KEMISORB 21" and "KEMISORB 22" manufactured by Chemipro Kasei.

Specific examples of cyanoacrylate compounds include ethyl-2-cyano-3,3-diphenylacrylate and 2-ethylhexyl-2-cyano-3,3-diphenylacrylate. Specific examples of such cyanoacrylate compounds include "SEESORB 501" manufactured by Shipro Kasei Kaisha, "BioSorb 910" manufactured by Kyodo Chemical, "UVISOLATOR 300" manufactured by Daiichi Kasei, and "Uvinul N-35" and "Uvinul N-539" manufactured by BASF.

Specific examples of oxanilide compounds include 2-ethoxy-2'-ethyloxanilic acid bisanilide. Examples of such oxanilide compounds include "Sanduvor VSU" manufactured by Clariant.

As a malonate compound, 2-(alkylidene)malonates are preferable, and 2-(1-aryl alkylidene)malonates are more preferable. Specific examples of such malonate compounds include "PR-25" manufactured by Clariant Japan, and "B-CAP" manufactured by Ciba Specialty Chemicals.

In a case where the aromatic polycarbonate resin sheet/film of the present invention contains an ultraviolet light absorbent, the content thereof is generally 0.001 pts. mass or more, preferably 0.01 pts. mass or more and more preferably 0.1 pts. mass or more, and generally 3 pts. mass or less, preferably 1 pts. mass or less, more preferably 0.5 pts. mass or less and still more preferably 0.4 pts. mass or less, with respect to a total of 100 pts. mass of a resin component containing (A) an aromatic polycarbonate resin and optionally (B) a thermoplastic resin and (C) a reinforcing filling material. If the content of the ultraviolet light absorbent is less than the above-mentioned lower limit, the effect of improving weatherability may be insufficient whereas if the content of the ultraviolet light absorbent exceeds the above-mentioned upper limit, mold deposits and die contamination may be caused.

The ultraviolet light absorbents may be contained alone or two or more types of them may be contained in any combination at any ratio.

(Dye/pigment)

If desired, the aromatic polycarbonate resin sheet/film of the present invention may contain a dye/pigment. By containing a dye/pigment, not only hiding property and weatherability of the aromatic polycarbonate resin composition of the present invention and an aromatic polycarbonate resin sheet/film resulting therefrom can be enhanced but also design quality of a molded article obtained by molding the aromatic polycarbonate resin composition of the present invention can be enhanced.

Examples of the dye/pigment include inorganic pigments, organic pigments and organic dyes.

Examples of inorganic pigments include: sulfide-based pigments such as carbon black, cadmium red and cadmium yellow; silicate-based pigments such as ultramarine; oxide-based pigments such as titanium oxide, zinc oxide, Bengal red, chromium oxide, iron black, titanium yellow, zinc-iron-based brown, titanium cobalt-based green, cobalt green, cobalt blue, copper-chromium-based black and copper-iron-based black; chromic acid-based pigments such as chrome yellow and molybdate orange; and ferrocyanide-based pigments such as Prussian blue.

Examples of organic pigments and organic dyes include: phthalocyanine-based dyes/pigments such as copper phthalocyanine blue and copper phthalocyanine green; azo-based dyes/pigments such as nickel azo yellow; condensed polycyclic dyes/pigments such as thioindigo-based, perinone-based, perylene-based, quinacridone-based, dioxazine-based, isoindolinone-based and quinophthalone-based dyes/pigments; and anthraquinone-based, heterocyclic and methyl-based dyes/pigments.

Among them, titanium oxide, carbon black, cyanine-based, quinoline-based, anthraquinone-based and phthalocyanine-based compounds and the like are preferable in terms of heat stability.

The dyes/pigments maybe contained alone or two or more types of them may be contained in any combination at any ratio. Furthermore, for the purposes of improving handleability upon extrusion and improving dispersibility into a resin composition, the dye/pigment may be used to form a master batch with (A) an aromatic polycarbonate resin.

In a case where the aromatic polycarbonate resin sheet/film of the present invention contains a dye/pigment, the content thereof may appropriately be selected according to required design, but it is generally 0.001 pts. mass or more, preferably 0.01 pts. mass or more and more preferably 0.1 pts. mass or more, and generally 3 pts. mass or less, preferably 2 pts. mass or less, more preferably 1 pts. mass or less and still more preferably 0.5 pts. mass or less, with respect to a total of 100 pts. mass of a resin component containing (A) an aromatic polycarbonate resin and optionally (B) a thermoplastic resin, and (C) a reinforcing filling material. If the content of the dye/pigment is lower than the lower limit of the above-mentioned range, coloring effect may not be sufficient. If the content of the dye/pigment exceeds the upper limit of the above-mentioned range, mold deposits or the like and die contamination may be caused.

(Antistatic agent)

If desired, the aromatic polycarbonate resin composition of the present invention may contain an antistatic agent. The antistatic agent is not particularly limited. It is preferably phosphonium sulfonate represented by General Formula (II) below.

[Chemical Formula 6]

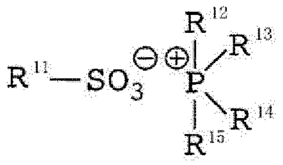

(II)

(in General Formula (II), $R^{11}$ represents an alkyl group or an aryl group with a carbon number of 1-40, which may have a substituent group, and $R^{12}$-$R^{15}$ each independently represent a hydrogen atom, an alkyl group or an aryl group with a carbon number of 1-10, which may or may not be identical)

While $R^{11}$ in General Formula (II) above represents an alkyl group or an aryl group with a carbon number of 1-40, an aryl group is more favorable from the perspective of heat resistance and compatibility with the polycarbonate resin. Preferably, it is a group derived from an alkylbenzene or alkylnaphthalene ring substituted with an alkyl group having a carbon number of 1-34, preferably 5-20 and particularly preferably 10-15. Moreover, while $R^{12}$-$R^{15}$ in General Formula (5) each independently represent a hydrogen atom or an alkyl group or an aryl group with a carbon number of 1-10, it is preferably alkyl with a carbon number of 2-8, more preferably an alkyl group with a carbon number of 3-6, and particularly preferably a butyl group.

Specific examples of such phosphonium sulfonate include tetrabutylphosphonium dodecyl sulfonate, tetrabutylphosphonium dodecylbenzene sulfonate, tributyloctylphosphonium dodecylbenzene sulfonate, tetraoctylphosphonium dodecylbenzene sulfonate, tetraethylphosphonium octadecylbenzene sulfonate, tributylmethylphosphonium dibutylbenzene sulfonate, triphenylphosphonium dibutylnaphthyl sulfonate and trioctylmethylphosphonium diisopropylnaphthyl sulfonate. Among them, tetrabutylphosphonium dodecylbenzene sulfonate is preferable in terms of compatibility with polycarbonate and availability.

They may be used alone or two or more types of them may be used in combination.

In a case where the aromatic polycarbonate resin sheet/film of the present invention contains an antistatic agent, the content thereof is preferably 0.1-5.0 pts. mass, more preferably 0.2-3.0 pts. mass, still more preferably 0.3-2.0 pts. mass, and particularly preferably 0.5-1.8 pts. mass, with respect to a total of 100 pts. mass of a resin component containing (A) an aromatic polycarbonate resin and optionally (B) a thermoplastic resin, and (C) a reinforcing filling material. If the content of the antistatic agent is less than 0.1 pts. mass, antistatic effect cannot be achieved whereas if it exceeds 5.0 pts. mass, mechanical strength is reduced which is likely to cause silver streak or peeling on the surface of the molded article, resulting in poor appearance.

(Flame retardant/drip inhibitor)

The aromatic polycarbonate resin sheet/film of the present invention may contain a flame retardant and/or a drip inhibitor.

Examples of the flame retardant include halogen-based flame retardants such as polycarbonate of halogenated bisphenol A, a brominated bisphenol-based epoxy resin, a brominated bisphenol-based phenoxy resin and brominated polystyrene; phosphoric ester-based flame retardants; organic metal salt-based flame retardants such as dipotassium diphenylsulfone-3,3'-disulfonate, potassium diphenylsulfone-3-sulfonate and potassium perfluorobutane sulfonate; and polyorganosiloxane-based flame retardants. Among them, phosphoric ester-based flame retardants are particularly preferable.

Specific examples of phosphoric ester-based flame retardants include triphenyl phosphate, resorcinol bis(dixylenyl phosphate), hydroquinone bis(dixylenyl phosphate), 4,4'-biphenol bis(dixylenyl phosphate), bisphenol A bis(dixylenyl phosphate), resorcinol bis(diphenyl phosphate), hydroquinone bis(diphenyl phosphate), 4,4'-biphenol bis(diphenyl phosphate) and bisphenol A bis(diphenyl phosphate). They may be used alone or two or more types of them may be used in combination. Among them, resorcinol bis(dixylenyl phosphate) and bisphenol A bis(diphenyl phosphate) are preferable.

In a case where the aromatic polycarbonate resin sheet/film of the present invention contains a phosphoric ester-based flame retardant, the content of the phosphoric ester-based flame retardant is preferably 1-30 pts. mass,

more preferably 3-25 pts. mass and particularly preferably 5-20 pts. mass, with respect to a total of 100 pts. mass of a resin component containing (A) an aromatic polycarbonate resin and optionally (B) a thermoplastic resin, and (C) a reinforcing filling material. If the content of the phosphoric ester-based flame retardant is less than the above-mentioned lower limit, flame retardancy may not be sufficient, whereas if the content exceeds the above-mentioned upper limit, heat resistance may not be sufficient.

Examples of a drip inhibitor include fluorinated polyolefins such as polyfluoroethylene, and preferably include polytetrafluoroethylene that has a fibril forming ability, which can easily be dispersed into polymers, and has a tendency to form a fibrous material by bonding the polymers. Polytetrafluoroethylenes that have a fibril forming ability are classified into Type 3 according to the ASTM standards. Besides a solid form, polytetrafluoroethylene may also be used in an aqueous dispersion form. Polytetrafluoroethylenes that have a fibril forming ability are commercially available, for example, as Teflon (registered trademark) 6J or Teflon (registered trademark) 30J from Du Pont-Mitsui Fluorochemicals, or as Polyflon (trade name) from Daikin Industries.

In a case where the aromatic polycarbonate resin sheet/film of the present invention contains a drip inhibitor, the content of the drip inhibitor is preferably 0.02-4 pts. mass and more preferably 0.03-3 pts. mass, with respect to a total of 100 pts. mass of a resin component containing (A) an aromatic polycarbonate resin and optionally (B) a thermoplastic resin, and (C) a reinforcing filling material. If the blending amount of the drip inhibitor exceeds the above-mentioned upper limit, appearance of the molded article may be deteriorated.

(Impact strength improving agent)

If necessary, the aromatic polycarbonate resin sheet/film of the present invention may further contain a thermoplastic elastomer as an impact strength improving agent. By blending the thermoplastic elastomer, impact resistance of the molded article can further be enhanced.

The thermoplastic elastomer is preferably a copolymer obtained by graft-copolymerizing a rubber component and a monomer component that can copolymerize therewith. A method for producing such a graft copolymer may be any method such as bulk polymerization, solution polymerization, suspension polymerization and emulsion polymerization, where either single-stage or multi-stage graft copolymerization may be employed.

The glass transition temperature of the above-described rubber component is generally 0°C or lower, preferably -20°C or lower and more preferably -30°C or lower. Specific examples of the rubber component include polybutadiene rubber, polyisoprene rubber, polyalkylacrylate rubbers such as polybutylacrylate, poly(2-ethylhexylacrylate) and a butylacrylate/2-ethylhexylacrylate copolymer, silicone rubbers such as polyorganosiloxane rubber, butadiene-acrylic composite rubber, IPN (interpenetrating polymer network) type composite rubber consisting of polyorganosiloxane rubber and polyalkylacrylate rubber, ethylene-a olefin-based rubbers such as styrene-butadiene rubber, ethylene-propylene rubber, ethylene-butene rubber and ethylene-octene rubber, ethylene-acrylic rubber, and fluorine-containing rubber. These may be used alone or two or more types of them may be used in combination. Among them, polybutadiene rubber, polyalkylacrylate rubber, IPN type composite rubber consisting of polyorganosiloxane rubber and polyalkylacrylate rubber, and styrene-butadiene rubber are preferable in terms of mechanical properties and surface appearance.

Specific examples of a monomer component that can copolymerize with a rubber component include aromatic vinyl compounds, vinyl cyanide compounds, (meth)acrylate ester compounds, (meth)acrylate compounds, epoxy group-containing (meth)acrylate ester compounds such as glycidyl(meth)acrylate, maleimide compounds such as maleimide, N-methylmaleimide and N-phenylmaleimide, $\alpha$, $\beta$-unsaturated carboxylic acid compounds such as maleic acid, phthalic acid and itaconic acid and anhydrides thereof (e.g., maleic anhydride). Such monomer components may be used alone or two or more types of them may be used in combination. Among them, an aromatic vinyl compound, a vinyl cyanide compound, a (meth)acrylate ester compound and a (meth)acrylate compound are preferable, and a (meth)acrylate ester compound is more preferable, in terms of mechanical properties and surface appearance. Specific examples of (meth)acrylate ester compounds include methyl (meth)acrylate, ethyl (meth)acrylate, butyl (meth)acrylate, cyclohexyl (meth)acrylate and octyl (meth)acrylate. Herein, "(meth)acrylic" refers to either or both of "acrylic" and "methacrylic". The same also applies to "(meth)acrylate".

A thermoplastic elastomer used in the present invention is preferably of a core-shell graft copolymer type in terms of impact resistance and surface appearance. Among them, core-shell graft copolymers having at least one type of rubber component selected from a polybutadiene-containing rubber, a polybutylacrylate-containing rubber and an IPN type composite rubber consisting of a polyorganosiloxane rubber and a polyalkylacrylate rubber as a core layer, which is surrounded by a shell layer formed through copolymerization with (meth)acrylate ester is particularly preferable. The above-described core-shell graft copolymer contain preferably 40% or higher by mass and more preferably 60% or higher by mass of a rubber component. In addition, 10% or higher by mass of the (meth)acrylic acid component is preferably contained.

Preferable specific examples of these core-shell type graft copolymers include a methyl methacrylate-butadiene-styrene copolymer (MBS), a methyl methacrylate-acrylonitrile-butadiene-styrene copolymer (MABS), a methyl methacrylate -butadiene copolymer (MB), a methyl methacrylate-acrylic rubber copolymer (MA), a methyl methacrylate-acrylic rubber-styrene copolymer (MAS), a methyl methacrylate-acrylic butadiene rubber copolymer, a methyl methacrylate-acrylic butadiene rubber-styrene copolymer and a methyl methacrylate-(acrylic silicone IPN rubber)copolymer. Such rubbery polymers may be used alone or two or more types of them may be used in combination.

Examples of commercially available products of such core-shell type graft copolymers include PARALOID of EXL series such as EXL2315, EXL2602 and EXL2603, KM series such as KM330 and KM336P, and KCZ series such as KCZ201 manufactured by Rohm and Haas Japan, and METABLEN S-2001 and SRK-200 manufactured by Mitsubishi Rayon.

In a case where the aromatic polycarbonate resin sheet/film of the present invention contains such thermoplastic elastomer as an impact strength improving agent, it preferably contains the thermoplastic elastomer for 1-15 pts. mass, in particular 2-12 pts. mass and above all 4-10 pts. mass, with respect to a total of 100 pts. mass of a resin component containing (A) an aromatic polycarbonate resin and optionally (B) a thermoplastic resin, and (C) a reinforcing filling material. If the content of the thermoplastic elastomer in the aromatic polycarbonate resin composition is too small, the effect of improving surface appearance and impact resistance of the molded article that can be achieved by blending the thermoplastic elastomer may be insufficient, whereas if the content is too large, surface hardness, heat resistance and rigidity are likely to decrease.

(Transesterification preventing agent)

If necessary, the aromatic polycarbonate resin sheet/film of the present invention may further contain a transesterification preventing agent. By blending the transesterification preventing agent, yellowing and reduction of impact strength can be suppressed.

As the transesterification preventing agent, for example, an alkyl acid phosphate compound such as monostearyl acid phosphate or distearyl acid phosphate can be used.

Examples of commercially available products of such transesterification preventing agent include AX-71 manufactured by ADEKA, and JP-506, JP-503 and JP-504 manufactured by Johoku Chemical.

The content of the transesterification preventing agent is, for example, 0.01-0.1 pts. mass with respect to 100 pts. mass of the resin component.

(Additional resin components)

An aromatic polycarbonate resin composition of the present invention and an aromatic polycarbonate resin sheet/film resulting therefrom may contain, as a resin component, an additional resin other than (A) the aromatic polycarbonate resin and optionally (B) the thermoplastic resin as long as the purpose of the present invention is not impaired. Examples of the additional resin component that can be blended include a polystyrene resin, a high-impact polystyrene resin, a hydrogenated polystyrene resin, a polyacrylic styrene resin, an ABS resin, an AS resin, an AES resin, an ASA resin, an SMA resin, a polyalkyl methacrylate resin, a polymethacryl methacrylate resin, a polyphenylether resin, a polycarbonate resin other than Component (A), an amorphous polyalkylene terephthalate resin, a polyester resin, an amorphous polyamide resin, poly-4-methylpentene-1, a cyclic polyolefin resin, an amorphous polyarylate resin and polyethersulfone.

(Additional additives)

The aromatic polycarbonate resin composition of the present invention may optionally contain an additional component other than those described above as long as various desired physical properties are not significantly impaired. Examples of additional components include various resin additives such as an anti-fogging agent, an anti-blocking agent, a mobility improving agent, a sliding modifier, a plasticizer, a dispersant and an antibacterial agent. These resin additives may be contained alone or two or more types of them may be used in any combination at any ratio.

[Method for producing aromatic polycarbonate resin sheet/film]

A method for producing an aromatic polycarbonate resin composition of the present invention is not limited, and any known method for producing an aromatic polycarbonate resin sheet/film can widely be employed.

Specific examples of such method include a method in which a resin component of the present invention containing (A) an aromatic polycarbonate resin, an optionally blended (B) thermoplastic resin and an additional resin described later, and (C) a reinforcing filling material, as well as optionally blended phosphorous-based heat stabilizer, antioxidant and additional component are mixed in advance using, for example, a mixer such as a tumbler, a Henschel mixer or a Super mixer, and then melt-kneaded with a mixer such as a Banbury mixer, a roll, a Brabender, a single-screw kneading extruder, a twin-screw kneading extruder or a kneader.

Alternatively, an aromatic polycarbonate resin composition of the present invention may be produced, for example, without mixing the respective components beforehand or by mixing only some of the components beforehand, and then feeding the resultant into an extruder using a side feeder for melt-kneading. In particular, in order to prevent crushing of the filler, (C) the reinforcing filling material is preferably fed separately from the resin component, from a side feeder disposed downstream from the extruder and then mixed.

[Method for producing sheet and film]

One embodiment of the present invention provides a method for producing a reinforced aromatic polycarbonate resin sheet or film as defined in appended claim 1. This production method preferably comprises: a first step of obtaining a resin composition comprising a resin component containing (A) 40-80 pts. mass of an aromatic polycarbonate and (C) 20-60 pts. mass of a reinforcing filling material, where the total of (A) the aromatic polycarbonate and (C) the reinforcing filling material is 100 pts. mass; a second step of melt-kneading the resin composition at a temperature of 260°C or higher to obtain a molten resin composition; a third step of forming the molten resin composition into a sheet; and a fourth step of compressing the molten resin composition molded into a sheet with a cooling roll that has a surface temperature of "glass transition temperature of resin component + 5°C or higher" to "glass transition temperature of resin component + 30°C or lower". According to this method, a resin sheet/film having excellent mechanical properties (for example, bending characteristics) as well as excellent surface smoothness can be obtained. In addition, according to this method, breaking of the sheet is unlikely to be caused upon production, while at the same time warping of the sheet can be suppressed, thereby allowing mass production of the sheet and enhancing productivity.

As a method for producing a reinforced aromatic polycarbonate resin sheet and film according to the present invention, for example, a melt extrusion method (for example, a T-die molding method) can preferably be used. Hereinafter, one embodiment of the method for producing a resin sheet/film of the present invention will be described.

(First step)

First, a resin composition comprising a resin component containing (A) an aromatic polycarbonate, (C) a reinforcing filling material, and, optionally, an additional component is produced. Specifically, a resin component containing (A) an aromatic polycarbonate resin, and optionally blended (B) thermoplastic resin and additional resin described later, (C) a reinforcing filling material, and optionally blended phosphorous-based heat stabilizer, antioxidant and additional component are mixed, not mixed or only some of the components are mixed before mixing with other component, for example, using any mixer such as a tumbler, a Henschel mixer or a Super mixer, and the resulting resin blend is kneaded with a melt extruder, thereby obtaining raw material pellets with highly dispersed additives.

If (C) the reinforcing filling material is kneaded too much, the filler might be crushed. Therefore, in order to prevent crushing of the filler, (C) the reinforcing filling material is preferably fed separately from the resin component, from a side feeder disposed downstream from the extruder and then mixed. Specifically, one preferable embodiment comprises a step of melt-kneading a resin component containing (A) an aromatic polycarbonate, and a step of adding (C) a reinforcing filling material to the melt-kneaded resin component. More specifically, a method in which a resin component is fed upstream of the extruder and melt-kneaded, and then (C) a reinforcing filling material is fed downstream from the extruder using a side feeder and melt-kneaded, can be employed. In particular, in order to prevent crushing of the filler, (C) the reinforcing filling material is preferably fed separately from the resin component, from a side feeder disposed downstream from the extruder and then mixed.

Moreover, if a resin other than (A) the aromatic polycarbonate, such as (B) a thermoplastic resin, is contained as the resin component, (A) the aromatic polycarbonate resin, (B) the thermoplastic resin and/or an additional resin component are mixed in advance, and then (C) the reinforcing filling material is added to and mixed with this mixture using a side feeder.

(Second step)

Subsequently, the resin composition obtained above is melt-kneaded to obtain a molten resin composition. For example, a thermoplastic resin material (preferably, pellets) compounded by the above-described method or the like is fed into the extruder and melt-kneaded.

The temperature for melt-kneading the resin composition is preferably 260°C or higher in terms of surface smoothness. In a case where an extruder is used for melt-kneading, the temperature for melt-kneading refers to the set temperature of the barrel. The set temperature of the barrel is more preferably 260°C-400°C, still more preferably 260-360°C and particularly preferably 260°C-320°C, in terms of surface smoothness and heat stability of the aromatic polycarbonate resin composition containing the filler. If the temperature is lower than 260°C, the resin composition cannot

be imparted with adequate remaining heat and thus surface smoothness is deteriorated, whereas if the temperature is higher than 400°C, decrease in the molecular weight of the polycarbonate resin is promoted and thus strength is greatly deteriorated.

Examples of the extruder include a single-screw extruder and a twin-screw extruder. In a case where a multilayer resin film having two or more layers is to be produced, a plurality of extruders can be used. For example, in a case where a three-layer resin film is to be produced, three or two extruders can be used to melt-knead the respective resin materials, and a three-kind three-layer distribution-type or two-kind three-layer distribution-type feed block can be used to distribute and introduce the molten resin materials into a single-layer T-shaped die for coextrusion. Alternatively, each of the molten resin materials can separately be introduced into a multi-manifold die and distributed to form a three-layer structure before the lip and then coextruded.

The extruder may appropriately be provided with a gear pump or the like for stabilizing the discharge amount of the resin.

(Third step)

Subsequently, the molten resin composition is molded into a sheet. For example, the molten resin composition that is melt-kneaded with the above-described extruder is extruded into a sheet shape from the end (lip) of the T-shaped die.

The T-shaped die has a slit-shaped lip, whose examples include a feed block die, a manifold die, a fish tail die, a coat hanger-type die and a screw die. In a case where a multilayer resin film is to be produced, a multi-manifold die or the like may be used.

While the length of the lip of the T-shaped die in the width direction is not particularly limited, it is preferably 1.2-1.5 times wider than the width of the product. While the opening degree of the lip may suitably be adjusted according to the thickness of the desired product, it is generally 1.01-10 times and preferably 1.1-5 times thicker than the thickness of the desired product. Preferably, the opening degree of the lip is adjusted by bolts arranged along the width direction of the T-shaped die. The lip opening degree may not be constant in the width direction. For example, the lip opening degree at the end can be adjusted to be narrower than the lip opening degree at the center to suppress the draw resonance phenomenon.

The thickness of the molded sheet product of the molten resin composition is, for example, 0.3 mm-1.5 mm in view of rigidity feeling.

The temperature of the T-die is set to preferably 260-400°C, more preferably 260-360°C and still more preferably 260°C-320°C in terms of surface smoothness and heat stability of the aromatic polycarbonate resin composition containing the filler. The melt-knead temperature (set barrel temperature) of the resin composition in the second step and the sheet-molding temperature (set T-die temperature) in the third step may or may not be the same.

(Fourth step)

Subsequently, the molten resin composition molded into a sheet shape is compressed with a cooling roll that has a surface temperature of "glass transition temperature of resin component + 5°C or higher" to "glass transition temperature of resin component + 30°C or lower". For example, the extruded sheet-shaped molten resin composition is molded by being sandwiched between two cooling rolls. The two cooling rolls may both be metal rolls or elastic rolls, or either may be a metal roll while the other may be an elastic roll. The surface of each roll preferably has a mirror surface, where the roll surface may partially be processed to have concave and convex parts without departing from the scope of the present invention.

The metal roll is not particularly limited as long as it is highly rigid, and examples include a drilled roll and a spiral roll.

Examples of the elastic roll include a rubber roll and an elastic roll provided with a metallic thin film on the outer periphery (hereinafter, sometimes referred to as a metal elastic roll), among which a metal elastic roll is preferable.

The space (roll gap) between the two cooling rolls is suitably adjusted according to the thickness of a desired product, such that both surfaces of the sheet-shaped molten resin material make contact with the center parts of the cooling rolls. Accordingly, when the sheet-shaped molten resin material is sandwiched between the two cooling rolls, it receives a certain pressure from the center parts of the cooling rolls to be formed into a resin sheet/film.

While the pressing pressure of the two cooling rolls is arbitrary within an acceptable range of roll rigidity, it is favorably a high value in order to enhance surface smoothness. Additionally, the molding speed of the molded sheet and film article can also suitably be adjusted.

Since the distance between the T-die-rolls (air gap) greatly affects cooling of the resin composition as well as surface smoothness, it is preferably as small as possible.

The sheet molding according to the present invention may be selected from a touch molding method in which

a resin flowing out from the T-die is sandwiched between two rolls that are regulated to have a predetermined temperature to be formed into a sheet, or an open molding method in which the resin makes contact with one roll. Taking surface smoothness into consideration, touch molding is preferably employed. After compressing a sheet of the molten resin composition with one or two rolls, the sheet may further be introduced into one or a plurality of cooling rolls for stepwise cooling.

Generally, when the roll temperature upon sheet molding an amorphous resin is higher than the glass transition temperature of the resin component, deterioration of surface appearance is caused due to mold-release failure and delay in solidification. Therefore, the temperature is set to be lower than the glass transition point by 20-40°C. According to the present invention, unlike the conventional methods, the roll temperature is set to a temperature that is higher than the glass transition point of the resin component by 5-30°C, that is, a temperature within "glass transition temperature of resin component + 5°C or higher" to "glass transition temperature of resin component + 30°C or lower". If the roll temperature is higher than "glass transition temperature + 30°C", mold release of the sheet from the roll becomes difficult, and appearance deterioration/warping is caused due to mold-release failure whereas at a temperature less than "glass transition temperature + 5°C", sufficient surface smoothness cannot be obtained.

Surprisingly, the present inventors found that releasability of the resin sheet can be enhanced and floating of the reinforcing material to the surface of the molded article can be prevented, thereby resulting in excellent surface smoothness, by employing, unlike the conventional methods, a roll temperature higher than the glass transition temperature of the resin component, for a molten resin composition sheet comprising a resin component containing an aromatic polycarbonate resin and a reinforcing filling material. Since a molded product thermally shaped using this sheet has excellent designability and excellent adhesiveness between the sheets/films, appearance can be excellent upon applying a hard coat or painting. The detail of the mechanism of enhancement of releasability and surface smoothness by controlling the roll temperature to stay within the above-mentioned range is unclear, but if the roll temperature is lower than the glass transition temperature by 5°C or more, shrinkage of the resin portion becomes larger by being rapidly cooled to a temperature lower than the glass transition temperature (solidification temperature), resulting in deterioration of the surface appearance. According to the present invention, the roll temperature is stepwisely decreased to a temperature that is higher than the glass transition temperature of the resin component by 5-30°C and thus pressure can be applied to the roll-contacting surface while the temporarily molten resin is making close contact with the roll, which is considered to result the good surface appearance. The present invention, however, is not limited to this presumptive mechanism.

The glass transition temperature of the "resin component" can be measured by DSC (differential scanning calorimeter) measurement, specifically by a method described in Example below.

In terms of surface appearance, the cooling roll temperature is more preferably "glass transition temperature of resin component + 5°C or higher" and still more preferably "glass transition temperature of resin component + 10°C or higher". In addition, in terms of mold releasability, it is preferably "glass transition temperature of resin component + 25°C or lower" and still more preferably "glass transition temperature of resin component + 20°C or lower".

When a plurality of cooling rolls are used, the temperatures of the cooling rolls may be identical or different. If touch molding is employed in which two rolls are used to compress the sheet of the molten resin composition, the temperatures of the two rolls are preferably identical. In a case where three or more rolls are used, the roll temperature of the first cooling roll (open molding) or the first and/or the second cooling rolls (touch molding) that makes first contact with the sheet-shaped molten resin composition obtained in the third step is set to lie within the above-mentioned range. Preferably, the temperatures of the following rolls are set to a temperature identical to the temperature of the first roll or the second roll, or may be set to stepwisely-decreasing temperatures so that the sheet of the molten resin composition is stepwisely cooled/solidified. In one preferable embodiment, at least three cooling rolls are used, where the first cooling roll and the second cooling roll have surface temperatures of "glass transition temperature of resin component + 5°C or higher" to "glass transition temperature of resin component + 30°C or lower", while the surface temperature of the third cooling roll is lower than the surface temperatures of the first cooling roll and the second cooling roll. According to this embodiment, the surface smoothness of the resin sheet/film can further be enhanced.

According to the present invention, the roll temperature refers to the surface temperature of the roll.

According to one embodiment of the present invention, in a method for molding a sheet or film with a T-shaped die melt extruder, a reinforced aromatic polycarbonate resin sheet or film is produced at a barrel temperature of 260°C or higher and at a roll temperature of "glass transition temperature of resin component + 5°C or higher" to "glass transition temperature of resin component + 30°C or lower".

The thickness of the sheet according to the present invention is preferably 0.2-1.5 mm and more preferably 0.3 mm-1.0 mm in terms of rigidity and surface smoothness. If the thickness is thinner than 0.2 mm, sheet formation becomes difficult since the sheet is likely to torn, whereas if the thickness is thicker than 1.5 mm, surface smoothness may be deteriorated due to insufficient cooling.

[Method for thermally shaping sheet and film]

As a method for thermally shaping a reinforced aromatic polycarbonate resin film/sheet of the present invention, a shaping method by heat bending can be employed in which the sheet/film is heat treated at the glass transition temperature of the resin composition or higher for processing into a predetermined shape. There are methods such as air-pressure molding, vacuum molding, thermal press molding, in-mold film molding in which the sheet/film is inserted into an injection molding die in advance and laminated with other resin by injection molding, free blow molding and heater bending process. In order to obtain a molded article having good surface smoothness, air-pressure molding, thermal press molding and in-mold film molding that allow high adhesion between the die and the sheet/film of the present invention are preferably employed.

Therefore, in one embodiment of the present invention, a molded article is provided by air-pressure molding a reinforced aromatic polycarbonate resin sheet or film, where the arithmetic mean surface roughness (Ra) of the die-non-contacting surface is 10.0 μm or less. Alternatively, in one embodiment of the present invention, a molded article is provided by thermal press molding a reinforced aromatic polycarbonate resin sheet or film, where the arithmetic mean surface roughness (Ra) of the die-non-contacting surface is 2.0 μm or less. Additionally, in one embodiment of the present invention, the reinforced aromatic polycarbonate resin sheet or film is used as an in-mold film. The arithmetic mean surface roughness (Ra) of the die-non-contacting surface can be measured according to a method described in Examples.

Examples of application of the thus-obtained sheet and thermally shaped product of the present invention include parts and housings of electric/electronic apparatuses, OA apparatuses, information terminal derives typified by smartphones and tablet PC, mechanical parts, electric home appliances, automobile parts, building members, various containers, leisure goods/sundries, lighting equipments and the like. Among them, due to excellent surface smoothness, the product of the present invention is very preferable for housing usage for smartphones and tablet PC that require high designability.

## EXAMPLES

Hereinafter, the present invention will be described in more detail by way of examples. The present invention, however, should not be limited to the following examples, and may be altered and carried out in any way without departing from the scope of the present invention. In the following description, the term "part(s)" refers to "pts. mass", a unit based on mass, unless otherwise stated.

<Glass transition temperature (Tg) of resin component>

The glass transition temperature of the resin component was measured with a differential scanning calorimeter SSC-5200 (DSC) manufactured by Seiko Instruments and Electronics at a temperature rising rate of 10°C/min. The measurement was carried out by rising the temperature to a melting temperature of the resin component (260°C) at 20°C/min, rapidly cooling to -30°C, and then again rising at 10°C/min (2nd run). The glass transition temperature was a value calculated from the profile of the 2nd run.

<Evaluation of surface smoothness>

The two-dimensional shapes of the center part of the sheet and the center part of the thermally shaped molded article were measured according to JIS B0601: 2003 using a surface shape measurement instrument (CS-H5000 CNC manufactured by Mitutoyo Corporation) to calculate arithmetic mean roughness (Ra). The measurement was carried out such that the reference length was 0.25 mm when Ra was higher than 0.02 μm and 0.1 μm or lower, the reference length was 0.8 mm when Ra was higher than 0.1 μm and 2.0 μm or lower, and the reference length was 2.5 mm when Ra was higher than 2.0 μm and 10 μm or lower.

<Tensile elastic modulus>

The molded sheet was punched to give test specimens (JIS K7127: 1999 test specimen type 1B) to perform tensile testing in the sheet extrusion direction (flow direction) using an autograph (AGS-X manufactured by Shimadzu Corporation). According to JIS K 7127: 1999 and at a test rate of 1 mm/min, a value obtained by diving the difference of stresses at two strain points of 0.0005 and 0.0025 by the difference of the strains was regarded as a tensile elastic modulus.

<Evaluation of adhesion>

As an evaluation of adhesion of a sheet molded article obtained by a molding method described below, adhesion strength to a double-coated adhesive tape was measured. An edge of a double-coated adhesive tape "NICETACK NW-15" manufactured by Nichiban cut into 15 x 250 mm was overlaid on an edge of a sheet molded article cut into 50 x 250 mm, and then a rubber roller with a handle was used to press back and force over the adhesive part once at a rate of 5 mm/s to stick the adhesive part. Thereafter, the marginal part of the double-coated tape was folded at an angle of 180°C, 40 mm of the tape was peeled off and held in the upper chuck of the autograph (AGS-X manufactured by Shimadzu Corporation). Meanwhile, the sheet part where the double-coated tape has been peeled off was held in the lower chuck. The tape was continuously peeled off at a rate of 30 mm/s to measure the testing force for 140 mm at displacement intervals of 20 mm to calculate the average value thereof.

<Molecular weight measurement>

Pellets and sheet molded article of the filler-containing polycarbonate resin composition was filtrated with methylene chloride to separate into the polycarbonate resin component and the filler. The molecular weight of the polycarbonate component was measured by a viscosity-average molecular weight. A viscosity-average molecular weight [Mv] refers to a viscosity-average molecular weight [Mv] converted from solution viscosity, and is a value (viscosity-average molecular weight: Mv) obtained by determining intrinsic viscosity [η] (unit: dl/g) with a Ubbelohde viscometer at a temperature of 20°C using methylene chloride as a solvent, and calculating according to the following Schnell's viscosity equation, i.e., $\eta = 1.23 \times 10^{-4} M^{0.83}$. Here, intrinsic viscosity [η] is a value obtained by measuring specific viscosity [$\eta_{sp}$] at each solution concentration [c] (g/dl), and calculating according to the following formula.

[Numerical Expression 2]

$$\eta = \lim_{c \to 0} \eta_{sp} / c$$

<Evaluation of refractive index>

The refractive index $n_{ab}$ of the resin component obtained by mixing Components (A) and (B) was measured using Model 2010 Prism Coupler measuring instrument from Metricon. A sample for measurement were prepared by pelletizing only a resin component consisting of (A) an aromatic polycarbonate resin and (B) a thermoplastic resin according to the method described in the section under <Production of resin pellets> below. The resulting pellets were melted and pressed at 260°C to obtain a film test piece with a thickness of 1.0 mm. Before the measurement, the state of the test piece was conditioned in environment of 23°C and 50% RH for 48 hours or longer. Refractive indexes were measured at three points (473 nm, 633 nm, 826 nm) in a bulk/substrate mode to calculate a refractive index (nd) at a wavelength of 589 nm following Cothy's formula.

The refractive index $n_c$ of (C) the reinforcing filling material (E-glass) was measured in the same manner by preparing a glass plate with a thickness of 1 mm having the same component as E-glass.

<Transparency>

A haze value (unit: %) of a sheet with a thickness of 0.6 mm was measured according to JIS K7136: 2000 with NDH-2000 haze meter manufactured by Nippon Denshoku Industries. A haze is a value used as a scale for resin turbidity, where smaller value indicates higher transparency, which is preferable.

[Materials used]

<Aromatic polycarbonate resin (A)>

Bisphenol A-type aromatic polycarbonate prepared by an interfacial polymerization method ("Iupiron (registered trademark) S-3000FN" manufactured by Mitsubishi Engineering-Plastics Corporation, viscosity-average molecular weight 25,000) with a glass transition temperature of 146°C (DSC method) and a refractive index nd= 1.583 at a wavelength of 589 nm

<Thermoplastic resins (B)>

[(B-1) Acrylic resin]

A copolymer mainly having about 25 % by weight of phenylmethacrylate/about 75% of methyl methacrylate (METABLEN H-880 manufactured by Mitsubishi Rayon) with a mass average molecular weight of 14,200 and a refractive index nd= 1.512 at a wavelength of 589 nm

[(B-2) Aliphatic polyester resin]

Poly 1,4-cyclohexane dimethanol-cyclohexane dicarboxylate (PCC, Primalloy CP201 manufactured by Mitsubishi Chemical) with a refractive index nd= 1.508 at a wavelength of 589 nm

<(C) Reinforcing filling material>

<(c-1) Fibrous filler>

(c-1-1) Glass chopped strands ("T-571" manufactured by Nippon Electric Glass, average fiber diameter: 13 μm, average fiber length: 3 mm, aminosilane treatment, heat resistant urethane sizing, cross-sectional shape: circular)
(c-1-2) Glass chopped strands, average fiber diameter: 7 μm, average fiber length: 3 mm, cross-sectional shape: circular
(c-1-3) Flat cross-sectional glass chopped strands, Cross section: average longer diameter 24 μm/average shorter diameter 7 μm, average fiber length: 3 mm
(c-1-4) Carbon fibers (chopped strands) ("TR-06U" manufactured by Mitsubishi Rayon, average fiber diameter: 7 μm, average fiber length: 6 mm, urethane-based compound sizing, no surface treatment, cross-sectional shape: circular)
(c-1-5) Glass chopped strands ("T-531DE" manufactured by Nippon Electric Glass, average fiber diameter: 7 μm, average fiber length: 3 mm, aminosilane treatment, epoxy sizing, cross-sectional shape: circular)
(c-1-6) Flat cross-sectional glass chopped strands ("3GPA-820S" manufactured by Nitto Boseki Co., average longer diameter 28 μm/average shorter diameter 7 μm, aminosilane treatment, heat resistant urethane sizing, average fiber length: 3 mm, cross-sectional shape: ellipse)

<(c-2) Plate-like filler>

(c-2-1) glass flakes ("Glass flakes MEG160FY-M01" manufactured by Nippon Sheet Glass Co., average particle diameter: 160 μm, average thickness: 0.7 μm, aminosilane epoxy silane treatment)
Among them, (c-1-1), (c-1-2), (c-1-5), (c-1-6) and (c-2-1) were E-glass reinforcing materials.
Refractive index nd= 1.562 of E-glass at a wavelength of 589 nm

<Other additives>

Transesterification preventing agent: mixture of monostearyl acid phosphate and distearyl acid phosphate ("AX-71" manufactured by ADEKA)

[Examples A-1 to 16, Comparative Examples A-1 to 8]

<Production of resin pellets>

A compound of a reinforced polycarbonate resin composition was kneaded and extruded into a strand using twin-screw extruder TEX 30α (C18 block, L/D = 55) with one vent manufactured by Japan Steel Works, under conditions of a screw rotation speed of 200rpm, a discharge amount of 20 kg/hour and a barrel temperature of 270°C. The extruded strand-shaped molten resin was rapidly cooled in a water bath and pelletized using a pelletizer. Component (A) was fed upstream of the extruder (C1) while component (B) was fed downstream from the extruder using a side feeder (C13 barrel), according to the mixing ratio indicated in Tables A-1 and A-2.

<Production of resin sheet>

The reinforced aromatic polycarbonate pellets were molded into a sheet with a width of 400 mm using a barrel with a diameter of 32 mm and a screw with L/D = 35 at a discharge amount of 20 kg/h, a screw rotation speed of 200 rpm and under cylinder/die head temperature conditions indicated in Tables A-1 and A-2. The resin flowed out from the die was guided to three mirror-finished polishing rolls, where the temperatures of the first and second rolls were set to conditions indicated in Tables A-1 and A-2 while the temperature of the third roll was set to 140°C. Each of the sheet thickness was adjusted by adjusting the take-over speed. The roll holding pressure between the first and second rolls was 5MPa as expressed in hydraulic pressure.

<Air-pressure molding method>

As the molding machine, an air-pressure molding machine (manufactured by NK Enterprise) was used. A die made of an aluminum material of 50 mm x 50 mm x height 4 mm with a core (1 mmR) was used. First, a 100-mm square sheet was conveyed to a heating zone, heated by an IR heater (set to 400°C), confirmed with an infrared radiation thermometer that it has reached 190°C, and then conveyed to a clamping zone that was set to a die temperature of 130°C for clamping. Next, pressurized air with a maximum pressure set to 2.5MPa was introduced into the die, and cooling was performed for 30 seconds to obtain a thermally shaped product. The results are shown in Table A-2.

In addition, results from thermal press molding performed under the conditions indicated in Table A-3 are shown in Table A-3.

[Table A-1]

| | Item | Abbreviation | | Example A-1* | Example A-2* | Example A-3* | Example A-4 | Example A-5 | Example A-6 | Example A-7* | Example A-8* | Example A-9 | Example A-10 | Example A-11 |
|---|---|---|---|---|---|---|---|---|---|---|---|---|---|---|
| Composition | (A) Aromatic polycarbonate | A | S-3000F | 60 | 50 | 60 | 60 | 60 | 60 | 70 | 60 | 60 | 60 | 60 |
| | (C) Reinforcing filling material | c-1-1 | T-571 | 40 | 50 | | | | | | | | | |
| | | c-1-2 | Φ7μ | | | 40 | | | | | | | | |
| | | c-1-3 | Flat | | | | 40 | 40 | 40 | | | 30 | 40 | 40 |
| | | c-1-4 | CF | | | | | | | 30 | | | | |
| | | c-2-1 | t0.7GFL | | | | | | | | 40 | 10 | | |
| Extrusion conditions | Sheet thickness, mm | | | 0.6 | 0.6 | 0.6 | 0.6 | 0.3 | 1.2 | 0.6 | 0.6 | 0.6 | 0.6 | 0.6 |
| | Barrel, T-die temperature | | | 300 | 300 | 300 | 300 | 300 | 300 | 300 | 300 | 300 | 260 | 350 |
| | First roll temperature | | | 160 | 160 | 160 | 160 | 160 | 160 | 160 | 160 | 160 | 170 | 160 |
| | Second roll temperature | | | 160 | 160 | 160 | 160 | 160 | 160 | 160 | 160 | 160 | 170 | 160 |
| Evaluations | Sheet surface smoothness (Ra), μm | | | 1.2 | 1.4 | 1.1 | 1.0 | 1.1 | 0.7 | 1.5 | 1.1 | 1.2 | 1.4 | 0.9 |
| | Tensile elastic modulus, MPa | | | 11700 | 13500 | 12300 | 12600 | 12600 | 12600 | 16200 | 9900 | 11900 | 12600 | 12600 |
| | Adhesion (Tensile test force), N | | | 2.7 | 2.7 | 2.7 | 2.8 | 2.7 | 2.9 | 2.6 | 2.7 | 2.7 | 2.7 | 2.8 |
| | Sheet molecular weight measurement, Mv | | | 22,000 | 22,000 | 22,000 | 22,000 | 22,000 | 22,000 | 22,000 | 22,000 | 22,000 | 22,000 | 21,000 |

*process examples

| | Item | Abbreviation | | Comparative Example A-1 | Comparative Example A-2 | Comparative Example A-3 | Comparative Example A-4 | | | | | | | |
|---|---|---|---|---|---|---|---|---|---|---|---|---|---|---|
| Composition | (A) Aromatic polycarbonate | A | S-3000F | 60 | 60 | 60 | 60 | | | | | | | |
| | (C) Reinforcing filling material | c-1-1 | T-571 | 40 | 40 | 40 | 40 | | | | | | | |
| | | c-1-2 | Φ7μ | | | | | | | | | | | |
| | | c-1-3 | Flat | | | | | | | | | | | |
| | | c-1-4 | CF | | | | | | | | | | | |
| | | c-2-1 | t0.7GFL | | | | | | | | | | | |
| Extrusion conditions | Sheet thickness, mm | | | 0.6 | 0.6 | 0.6 | 0.6 | | | | | | | |
| | Barrel, T-die temperature | | | 300 | 300 | 370 | 250 | | | | | | | |
| | First roll temperature | | | 120 | 180 | 160 | 160 | | | | | | | |
| | Second roll temperature | | | 120 | 180 | 160 | 160 | | | | | | | |
| Evaluations | Sheet surface smoothness (Ra), μm | | | 3.6 | 2.6 | 1.0 | 4.2 | | | | | | | |
| | Tensile elastic modulus, MPa | | | 11700 | 11700 | 11700 | 11700 | | | | | | | |
| | Adhesion (Tensile test force), N | | | 1.9 | - | 2.8 | 1.8 | | | | | | | |
| | Sheet molecular weight measurement, Mv | | | 22,000 | 22,000 | 18,000 | 22,000 | | | | | | | |

[Table A-2]

| | Item | Abbreviation | | Example A-12* | Example A-13* | Comparative Example A-5 | Comparative Example A-6 |
|---|---|---|---|---|---|---|---|
| Composition | (A) Aromatic polycarbonate | A | S-3000F | 60 | 70 | 60 | 70 |
| | (C) Reinforcing filling material | c-1-1 | T-571 | 40 | | 40 | |
| | | c-1-2 | Φ7μ | | | | |
| | | c-1-3 | Flat | | | | |
| | | c-1-4 | CF | | 30 | | 30 |
| | | c-2-1 | t0.7GFL | | | | |
| Extrusion conditions | Sheet thickness, mm | | | 0.6 | 0.6 | 0.6 | 0.6 |
| | Barrel, T-die temperature | | | 300 | 300 | 280 | 280 |
| | First roll temperature | | | 160 | 160 | 120 | 120 |
| | Second roll temperature | | | 160 | 160 | 120 | 120 |
| Evaluations | Sheet surface smoothness (Ra), μm | | | 1.2 | 1.5 | 4.1 | 5.6 |
| | Air-pressure molded article surface smoothness (Ra), μm | | | 6.1 | 7.4 | 12 | 15 |

[Table A-3]

| | Item | Abbreviation | | Example A-14* | Example A-15* | Comparative Example A-7 | Comparative Example A-8 |
|---|---|---|---|---|---|---|---|
| Composition | (A) Aromatic polycarbonate | A | S-3000F | 60 | 70 | 60 | 70 |
| | (C) Reinforcing filling material | c-1-1 | T-571 | 40 | | 40 | |
| | | c-1-2 | Φ7μ | | | | |
| | | c-1-3 | Flat | | | | |
| | | c-1-4 | CF | | 30 | | 30 |
| | | c-2-1 | t0.7GFL | | | | |
| Extrusion conditions | Sheet thickness, mm | | | 0.6 | 0.6 | 0.6 | 0.6 |
| | Barrel, T-die temperature | | | 300 | 300 | 280 | 280 |
| | First roll temperature | | | 160 | 160 | 120 | 120 |
| | Second roll temperature | | | 160 | 160 | 120 | 120 |
| Evaluations | Sheet surface smoothness (Ra), μm | | | 1.2 | 1.5 | 4.1 | 5.6 |
| | Thermal press molded article surface smoothness (Ra), μm | | | 0.3 | 0.7 | 1.1 | 1.9 |

*process examples

[Examples B-1 to 16, Comparative Examples B-1 to 10]

<Production of resin pellets>

A compound of a reinforced polycarbonate resin composition was kneaded and extruded into a strand using twin-screw extruder TEX 30α (C18 block, L/D = 55) with one vent manufactured by Japan Steel Works, under conditions of a screw rotation speed of 200rpm, a discharge amount of 20 kg/hour and a barrel temperature of 270°C. The extruded strand-shaped molten resin was rapidly cooled in a water bath and pelletized using a pelletizer. Components (A) and (B) were fed upstream of the extruder (C1) while component (C) was fed downstream from the extruder using a side feeder (C13 barrel), according to the mixing ratio indicated in Tables B-1 and B-2.

<Production of resin sheet>

The reinforced aromatic polycarbonate pellets were molded into a sheet with a width of 400 mm using a barrel with a diameter of 32 mm and a screw with L/D = 35 at a discharge amount of 20 kg/h, a screw rotation speed of 200 rpm and under cylinder/die head temperature conditions indicated in Table B-1 and B-2. The resin flowed out from the die was guided to three mirror finished polishing rolls, where the temperatures of the first and second rolls were set to conditions indicated in Tables B-1 and B-2 while the temperature of the third roll was set to 115°C. Each of the sheet thickness was adjusted by adjusting the take-over speed. The roll holding pressure between the first and second rolls was 5MPa as expressed in hydraulic pressure.

<Air-pressure molding method>

As the molding machine, an air-pressure molding machine (manufactured by NK Enterprise) was used. A die made of an aluminum material of 50 mm x 50 mm x height 4 mm with a core (1 mmR) was used. First, a 100-mm square sheet was conveyed to a heating zone, heated by an IR heater (set to 400°C), confirmed that it has reached 160°C with an infrared radiation thermometer, and then conveyed to a clamping zone that was set to a die temperature of 110°C for clamping. Next, pressurized air with a maximum pressure set to 2.5MPa was introduced into the die, and cooling was performed for 30 seconds to obtain a thermally shaped product. The results are shown in Table B-3. In addition, results from thermal press molding performed under the conditions indicated in Table B-4 are shown in Table B-4.

[Table B-1]

| | Item | Abbreviation | | Example B-1 | Example B-2 | Example B-3 | Example B-4 | Example B-5* | Example B-6* | Example B-7* | Example B-8* | Example B-9* | Example B-10 | Example B-11 | Example B-12 | Example B-13 | Example B-14 |
|---|---|---|---|---|---|---|---|---|---|---|---|---|---|---|---|---|---|
| Composition | (A) Aromatic polycarbonate | A | S-3000F | 75 | 75 | 75 | 75 | 75 | 75 | 75 | 75 | 75 | 80 | 65 | 75 | 75 | 70 |
| | (B) Thermoplastic resin | B-1 | H-880 | 25 | 25 | 25 | 25 | 25 | 25 | 25 | 25 | 25 | 20 | 35 | | | |
| | | B-2 | CP201 | | | | | | | | | | | | 25 | 25 | 30 |
| | (C) E-glass reinforcing material | c-1-1 | T-571 | | | | | | 30 | | 30 | 30 | | | | | |
| | | c-1-5 | Φ7μ | | | | | 30 | | | | | | | | | |
| | | c-1-6 | Flat | 10 | 20 | 30 | 40 | | | | | | 20 | 20 | 20 | 30 | 40 |
| | | c-2-1 | t0.7GFL | | | | | | | 30 | | | | | | | |
| | Transesterification preventing agent | | AX-71 | | | | | | | | | | | | 0.1 | 0.1 | 0.1 |
| Extrusion conditions | Sheet thickness, mm | | | 0.6 | 0.6 | 0.6 | 0.6 | 0.6 | 0.6 | 0.6 | 0.3 | 1.5 | 0.6 | 0.6 | 0.6 | 0.6 | 1 |
| | Barrel, T-die temperature | | | 280 | 280 | 280 | 290 | 280 | 290 | 280 | 280 | 280 | 280 | 280 | 280 | 290 | 300 |
| | First and second roll temperature | | | 140 | 150 | 150 | 155 | 150 | 150 | 150 | 150 | 150 | 155 | 145 | 143 | 148 | 143 |
| | Tg of resin component | | | 130 | 130 | 130 | 130 | 130 | 130 | 130 | 130 | 130 | 133 | 125 | 123 | 123 | 120 |
| Refractive index nd | nc | | | 1.562 | 1.562 | 1.562 | 1.562 | 1.562 | 1.562 | 1.562 | 1.562 | 1.562 | 1.562 | 1.562 | 1.562 | 1.562 | 1.562 |
| | nab | | | 1.565 | 1.565 | 1.565 | 1.565 | 1.565 | 1.565 | 1.565 | 1.565 | 1.565 | 1.568 | 1.558 | 1.564 | 1.564 | 1.56 |
| | nab - nc | | | 0.003 | 0.003 | 0.003 | 0.003 | 0.003 | 0.003 | 0.003 | 0.003 | 0.003 | 0.006 | -0.004 | 0.002 | 0.002 | -0.002 |

(continued)

| | Item | Abbreviation | | Example B-1 | Example B-2 | Example B-3 | Example B-4 | Example B-5* | Example B-6* | Example B-7* | Example B-8* | Example B-9* | Example B-10 | Example B-11 | Example B-12 | Example B-13 | Example B-14 |
|---|---|---|---|---|---|---|---|---|---|---|---|---|---|---|---|---|---|
| Evaluations | HAZE, % | | | 25 | 30 | 32 | 38 | 30 | 34 | 34 | 27 | 39 | 38 | 43 | 30 | 32 | 37 |
| | Sheet surface smoothness (Ra), μm | | | 0.7 | 0.9 | 1 | 1.2 | 1 | 1.1 | 1.1 | 1.3 | 0.7 | 0.9 | 0.9 | 0.9 | 1 | 1.2 |
| | Tensile elastic modulus, MPa | | | 4800 | 6600 | 8700 | 11000 | 8300 | 8000 | 7600 | 8000 | 8000 | 6500 | 6700 | 5500 | 8200 | 10800 |
| | Adhesion (Tensile test force), N | | | 2.9 | 2.8 | 2.8 | 2.7 | 2.8 | 2.7 | 2.7 | 2.6 | 2.9 | 2.8 | 2.8 | 2.8 | 2.8 | 2.7 |

*process examples

[Table B-2]

| | Item | Abbreviation | | Comparative Example B-1 | Comparative Example B-2 | Comparative Example B-3 | Comparative Example B-4 | Comparative Example B-5 | Comparative Example B-6 | Comparative Example B-7 |
|---|---|---|---|---|---|---|---|---|---|---|
| Composition | (A) Aromatic polycarbonate | A | S-3000F | 75 | 75 | 75 | 75 | 90 | 60 | 75 |
| | (B) Thermoplastic resin | B-1 | H-880 | 25 | 25 | 25 | 25 | 10 | 45 | |
| | | B-2 | CP201 | | | | | | | 25 |
| | (C) E-glass reinforcing material | c-1-1 | T-571 | | | | | | | |
| | | c-1-5 | Φ7μ | | | | | | | |
| | | c-1-6 | Flat | 30 | 30 | 30 | 30 | 20 | 20 | 20 |
| | | c-2-1 | t0.7GFL | | | | | | | |
| | Transesterification preventing agent | | AX-71 | | | | | | | |
| Extrusion conditions | Sheet thickness, mm | | | 0.6 | 0.6 | 0.6 | 0.6 | 0.6 | 0.6 | 0.6 |
| | Barrel, T-die temperature | | | 280 | 280 | 240 | 340 | 280 | 290 | 280 |
| | First and second roll temperature | | | 170 | 120 | 140 | 140 | 155 | 140 | 100 |
| | Tg of resin component | | | 130 | 130 | 130 | 130 | 139 | 122 | 122 |
| Refractive index nd | nc | | | 1.562 | 1.562 | 1.562 | 1.562 | 1.562 | 1.562 | 1.562 |
| | nab | | | 1.565 | 1.565 | 1.565 | 1.565 | 1.574 | 1.551 | 1.564 |
| | nab - nc | | | 0.003 | 0.003 | 0.003 | 0.003 | 0.012 | -0.011 | 0.002 |

(continued)

| | Item | Abbreviation | | Comparative Example B-1 | Comparative Example B-2 | Comparative Example B-3 | Comparative Example B-4 | Comparative Example B-5 | Comparative Example B-6 | Comparative Example B-7 |
|---|---|---|---|---|---|---|---|---|---|---|
| Evaluations | HAZE, % | | | 58 | 74 | 88 | 95 | 75 | 75 | 80 |
| | Sheet surface smoothness(Ra), μm | | | 2.5 | 3.4 | 4.2 | - | 0.9 | 0.9 | 3.8 |
| | Tensile elastic modulus, MPa | | | 8700 | 8700 | 8700 | 8700 | 6800 | 5600 | 6600 |
| | Adhesion (Tensile test force), N | | | 2.3 | 1.9 | 1.8 | - | 2.8 | 2.8 | 2.8 |

[Table B-3]

| | Item | Abbreviation | | Example B-13 | Example B-14 | Example B-8 |
|---|---|---|---|---|---|---|
| Composition | (A) Aromatic polycarbonate | A | S-3000F | 75 | 75 | 75 |
| | (B) Thermoplastic resin | B-1 | H-880 | 25 | | 25 |
| | | B-2 | CP201 | | 25 | |
| | (C) E-glass reinforcing material 1 | c-1-1 | T-571 | | | |
| | | c-1-5 | Φ7μ | | | |
| | | c-1-6 | Flat | 30 | 20 | 30 |
| | | c-2-1 | t0.7GFL | | | |
| | Transesterification preventing agent | | AX-71 | | 0.1 | |
| Extrusion conditions | Sheet thickness, mm | | | 0.6 | 0.6 | 0.6 |
| | Sheet surface smoothness (Ra), μm | | | 1 | 0.9 | 3.4 |
| | Barrel, T-die temperature | | | 280 | 280 | 280 |
| | First and second roll temperature | | | 150 | 143 | 120 |
| Evaluations | Air-pressure molded article surface smoothness (Ra), μm | | | 5.5 | 4.9 | 11 |
| | Adhesion (Tensile test force), N | | | 1.38 | 1.56 | 0.5 |

[Table B-4]

| | Item | Abbreviation | | Example B-15 | Example B-16 | Comparative Example B-10 |
|---|---|---|---|---|---|---|
| Composition | (A) Aromatic polycarbonate | A | S-3000F | 75 | 75 | 75 |
| | (B) Thermoplastic resin | B-1 | H-880 | 25 | | 25 |
| | | B-2 | CP201 | | 25 | |
| | (C) E-glass reinforcing material | c-1-1 | T-571 | | | |
| | | c-1-5 | Φ7μ | | | |
| | | c-1-6 | Flat | 30 | 20 | 30 |
| | | c-2-1 | t0.7GFL | | | |
| | Transesterification preventing agent | | AX-71 | | 0.1 | |
| Extrusion conditions | Sheet type | | | Example B-3 | Example B-14 | Comparative Example B-2 |
| | Sheet thickness, mm | | | 0.6 | 0.6 | 0.6 |
| | Sheet surface smoothness (Ra), μm | | | 1 | 0.9 | 3.4 |

(continued)

| | Item | Abbreviation | | Example B-15 | Example B-16 | Comparative Example B-10 |
|---|---|---|---|---|---|---|
| Evaluations | Thermal press molded article surface smoothness (Ra), μm | | | 0.3 | 0.25 | 1.1 |
| | Adhesion (Tensile test force), N | | | 2.9 | 2.9 | 2.7 |

DESCRIPTION OF SIGNS

S Transverse cross section of flat glass fiber

R Rectangle circumscribing fiber cross section

Ra Longer side of rectangle

Rb Shorter side of rectangle

[Table B-2]

| | Item | Abbreviation | | Comparative Example B-1 | Comparative Example B-2 | Comparative Example B-3 | Comparative Example B-4 | Comparative Example B-5 | Comparative Example B-6 | Comparative Example B-7 |
|---|---|---|---|---|---|---|---|---|---|---|
| Composition | (A) Aromatic polycarbonate | A | S-3000F | 75 | 75 | 75 | 75 | 90 | 60 | 75 |
| | (B) Thermoplastic resin | B-1 | H-880 | 25 | 25 | 25 | 25 | 10 | 45 | |
| | | B-2 | CP201 | | | | | | | 25 |
| | (C) E-glass reinforcing material | c-1-1 | T-571 | | | | | | | |
| | | c-1-5 | Φ7μ | | | | | | | |
| | | c-1-6 | Flat | 30 | 30 | 30 | 30 | 20 | 20 | 20 |
| | | c-2-1 | t0.7GFL | | | | | | | |
| | Transesterification preventing agent | | AX-71 | | | | | | | |
| Extrusion conditions | Sheet thickness, mm | | | 0.6 | 0.6 | 0.6 | 0.6 | 0.6 | 0.6 | 0.6 |
| | Barrel, T-die temperature | | | 280 | 280 | 240 | 340 | 280 | 290 | 280 |
| | First and second roll temperature | | | 170 | 120 | 140 | 140 | 155 | 140 | 100 |
| | Tg of resin component | | | 130 | 130 | 130 | 130 | 139 | 122 | 122 |
| Refractive index nd | nc | | | 1.562 | 1.562 | 1.562 | 1.562 | 1.562 | 1.562 | 1.562 |
| | nab | | | 1.565 | 1.565 | 1.565 | 1.565 | 1.574 | 1.551 | 1.564 |
| | nab - nc | | | 0.003 | 0.003 | 0.003 | 0.003 | 0.012 | -0.011 | 0.002 |

(continued)

| | Item | Abbreviation | | Comparative Example B-1 | Comparative Example B-2 | Comparative Example B-3 | Comparative Example B-4 | Comparative Example B-5 | Comparative Example B-6 | Comparative Example B-7 |
|---|---|---|---|---|---|---|---|---|---|---|
| Evaluations | HAZE, % | | | 58 | 74 | 88 | 95 | 75 | 75 | 80 |
| | Sheet surface smoothness (Ra), μm | | | 2.5 | 3.4 | 4.2 | - | 0.9 | 0.9 | 3.8 |
| | Tensile elastic modulus, MPa | | | 8700 | 8700 | 8700 | 8700 | 6800 | 5600 | 6600 |
| | Adhesion (Tensile test force), N | | | 2.3 | 1.9 | 1.8 | - | 2.8 | 2.8 | 2.8 |

[Table B-3]

| | Item | Abbreviation | | Example B-13 | Example B-14 | Example B-8 |
|---|---|---|---|---|---|---|
| Composition | (A) Aromatic polycarbonate | A | S-3000F | 75 | 75 | 75 |
| | (B) Thermoplastic resin | B-1 | H-880 | 25 | | 25 |
| | | B-2 | CP201 | | 25 | |
| | (C) E-glass reinforcing material 1 | c-1-1 | T-571 | | | |
| | | c-1-5 | Φ7μ | | | |
| | | c-1-6 | Flat | 30 | 20 | 30 |
| | | c-2-1 | t0.7GFL | | | |
| | Transesterification preventing agent | | AX-71 | | 0.1 | |
| Extrusion conditions | Sheet thickness, mm | | | 0.6 | 0.6 | 0.6 |
| | Sheet surface smoothness (Ra), μm | | | 1 | 0.9 | 3.4 |
| | Barrel, T-die temperature | | | 280 | 280 | 280 |
| | First and second roll temperature | | | 150 | 143 | 120 |
| Evaluations | Air-pressure molded article surface smoothness (Ra), μm | | | 5.5 | 4.9 | 11 |
| | Adhesion (Tensile test force), N | | | 1.38 | 1.56 | 0.5 |

[Table B-4]

| | Item | Abbreviation | | Example B-15 | Example B-16 | Comparative Example B-10 |
|---|---|---|---|---|---|---|
| Composition | (A) Aromatic polycarbonate | A | S-3000F | 75 | 75 | 75 |
| | (B) Thermoplastic resin | B-1 | H-880 | 25 | | 25 |
| | | B-2 | CP201 | | 25 | |
| | (C) E-glass reinforcing material | c-1-1 | T-571 | | | |
| | | c-1-5 | Φ7μ | | | |
| | | c-1-6 | Flat | 30 | 20 | 30 |
| | | c-2-1 | t0.7GFL | | | |
| | Transesterification preventing agent | | AX-71 | | 0.1 | |
| Extrusion conditions | Sheet type | | | Example B-3 | Exemple B-14 | Comparative Example B-2 |
| | Sheet thickness, mm | | | 0.6 | 0.6 | 0.6 |
| | Sheet surface smoothness (Ra), μm | | | 1 | 0.9 | 3.4 |

(continued)

| | Item | Abbreviation | | Example B-15 | Example B-16 | Comparative Example B-10 |
|---|---|---|---|---|---|---|
| Evaluations | Thermal press molded article surface smoothness (Ra), μm | | | 0.3 | 0.25 | 1.1 |
| | Adhesion (Tensile test force), N | | | 2.9 | 2.9 | 2.7 |

DESCRIPTION OF SIGNS

S Transverse cross section of flat glass fiber

R Rectangle circumscribing fiber cross section

Ra Longer side of rectangle

Rb Shorter side of rectangle

## Claims

1. A reinforced aromatic polycarbonate resin sheet or film, which is selected from the following embodiments (I) and (II):

(I) A reinforced aromatic polycarbonate resin sheet or film with a thickness of 0.2-1.5 mm comprising: a resin component containing (A) 40-80 pts. mass of an aromatic polycarbonate; and (C) 20-60 pts. mass of a reinforcing filling material, where the total of (A) the aromatic polycarbonate and (C) the reinforcing filling material is 100 pts. mass,
wherein an arithmetic mean surface roughness (Ra) of at least one surface is 2.0 μm or less;
(II) A reinforced aromatic polycarbonate resin sheet or film with a thickness of 0.2-1.5 mm, obtained by mixing 100 pts. mass of a resin component containing (A) 55-90 pts. mass of anaromatic polycarbonate and (B) 10-45 pts. mass of a thermoplastic resin that is compatible with the aromatic polycarbonate and having a refractive index of 1.56 or less at a wavelength of 589 nm, with (C) 5-45 pts. mass of a reinforcing filling material,
wherein "nab" representing the refractive index of the resin blend component of (A) and (B) at a wavelength of 589 nm and "nc" representing the refractive index of (C) the reinforcing filling material at a wavelength of 589 nm satisfy Formula i) below:

$$\text{Formula i)} \quad -0.008 \leq nab - nc \leq +0.008,$$

and an arithmetic mean surface roughness (Ra) of at least one surface is 2.0 μm or less;
**characterized in that**, in embodiments (I) and (II), the (C) reinforcing filling material contains (c-1) a fibrous filler, wherein the fibers have a length of 5 mm or less and a flat or elliptic cross-sectional shape.

2. The reinforced aromatic polycarbonate resin sheet or film according to Claim 1, embodiment (II), wherein (B) the thermoplastic resin comprises (B-1) an acrylic resin or (B-2) an aliphatic polyester resin.

3. The reinforced aromatic polycarbonate resin sheet or film according to Claim 2, wherein (B-1) the acrylic resin is a (meth)acrylate copolymer whose mass ratio (b1/b2) of an aromatic (meth)acrylate unit (b1) and a methyl methacrylate unit (b2) is 5-50/50-95, and whose mass average molecular weight is 5,000-30,000.

4. The reinforced aromatic polycarbonate resin sheet or film according to Claim 2, wherein (B-2) the aliphatic polyester

resin is polycyclohexane dimethanol-cyclohexane dicarboxylate (PCC).

**5.** The reinforced aromatic polycarbonate resin sheet or film according to any one of Claims 1, embodiments (I) and (II), 2-4, wherein (C) the reinforcing filling material comprises an E-glass reinforcing material.

**6.** The reinforced aromatic polycarbonate resin sheet or film according to any one of Claims 1, embodiments (I) and (II), 2-5, which is produced by a sheet or film molding method through a T-shaped die melt extruder at a barrel temperature of 260°C or higher and a roll temperature of "glass transition temperature of resin component + 5°C or higher" to "glass transition temperature of resin component + 30°C or lower".

**7.** A molded product selected from the following embodiments (a), (b) and (c):

(a) A molded article obtained by subjecting the reinforced aromatic polycarbonate resin sheet or film according to any one of Claims 1-6 to air-pressure molding, wherein an arithmetic mean surface roughness (Ra) of the die-non-contacting surface is 10.0 μm or less;
(b) A molded article obtained by subjecting the reinforced aromatic polycarbonate resin sheet or film according to any one of Claims 1-6 to thermal press molding, wherein an arithmetic mean surface roughness (Ra) of the die-non-contacting surface is 2.0 μm or less;
and
(c) A molded body obtained by using the reinforced aromatic polycarbonate resin sheet or film according to any one of Claims 1-6 as an in-mold film.

**8.** A method for producing a reinforced aromatic polycarbonate resin sheet or film comprising:

a first step of obtaining a resin composition comprising a resin component containing (A) an aromatic polycarbonate and (C) a reinforcing filling material;
a second step of melt-kneading the resin composition at a temperature of 260°C or higher to obtain a molten resin composition;
a third step of molding the molten resin composition into a sheet; and
a fourth step of compressing the molten resin composition molded into a sheet with a cooling roll,
**characterized in that** in the fourth step the cooling roll has a surface temperature of "glass transition temperature of resin component + 5°C or higher" to "glass transition temperature of resin component + 30°C or lower".

**9.** The production method according to Claim 8, wherein the first step comprises the steps of: melt-kneading the resin component containing (A) the aromatic polycarbonate; and adding (C) the reinforcing filling material to the melt-kneaded resin component.

## Patentansprüche

**1.** Bogen oder Folie aus verstärktem Polycarbonatharz, ausgewählt aus den folgenden Ausführungsformen (I) und (II):

(I) Bogen oder Folie aus verstärktem Polycarbonatharz mit einer Dicke von 0,2 bis 1,5 mm, umfassend: eine Harzkomponente, die (A) 40-80 Massenteile eines aromatischen Polycarbonats und (C) 20-60 Massenteile eines verstärkenden Füllmaterials enthält, wobei die Gesamtmenge von dem (A) aromatischen Polycarbonat und dem (C) verstärkenden Füllmaterial 100 Massenteile beträgt,
wobei eine arithmetische mittlere Oberflächenrauheit (Ra) von mindestens einer Oberfläche 2,0 μm oder weniger beträgt;
(II) Bogen oder Folie aus verstärktem Polycarbonatharz mit einer Dicke von 0,2 bis 1,5 mm, erhalten durch Mischen von 100 Massenteilen einer Harzkomponente, enthaltend (A) 55-90 Massenteile eines aromatischen Polycarbonats und (B) 10-45 Massenteile eines thermoplastischen Harzes, das mit dem aromatischen Polycarbonat kompatibel ist und einen Brechungsindex von 1,56 oder weniger bei einer Wellenlänge von 589 nm aufweist, mit (C) 5 bis 45 Massenteilen eines verstärkenden Füllmaterials,
wobei "nab", das für den Brechungsindex der Harzmischungskomponente aus (A) und (B) bei einer Wellenlänge von 589 nm steht, und "nc", das für den Brechungsindex des (C) verstärkenden Füllmaterials bei einer Wellenlänge von 589 nm steht, die folgende Formel i) erfüllen:

$$\text{Formel i)} \quad -0{,}008 \leq nab - nc \leq +0{,}008,$$

und eine arithmetische mittlere Oberflächenrauheit (Ra) von mindestens einer Oberfläche 2,0 μm oder weniger beträgt;
**dadurch gekennzeichnet, dass** in den Ausführungsformen (I) und (II) das (C) verstärkende Füllmaterial einen (c-1) faserigen Füllstoff enthält, wobei die Fasern eine Länge von 5 mm oder weniger und einen flachen oder elliptischen Querschnitt aufweisen.

**2.** Bogen oder Folie aus verstärktem Polycarbonatharz gemäß Anspruch 1, Ausführungsform (II), wobei das (B) thermoplastische Harz ein (B-1) Acrylharz oder ein (B-2) aliphatisches Polyesterharz umfasst.

**3.** Bogen oder Folie aus verstärktem Polycarbonatharz gemäß Anspruch 2, wobei das (B-1) Acrylharz ein (Meth)acrylatcopolymer ist, dessen Massenverhältnis (b1/b2) von aromatischer (Meth)acrylateinheit (b1) und Methylmethacrylateinheit (b2) 5-50/50-95 beträgt und dessen massengemitteltes Molekulargewicht 5.000-30.000 beträgt.

**4.** Bogen oder Folie aus verstärktem Polycarbonatharz gemäß Anspruch 2, wobei das (B-2) aliphatische Polyesterharz Polycyclohexandimethanolcyclohexandicarboxylat (PCC) ist.

**5.** Bogen oder Folie aus verstärktem Polycarbonatharz gemäß einem der Ansprüche 1, Ausführungsformen (I) und (II), 2-4, wobei das (C) verstärkende Füllmaterial ein E-Glas-Verstärkungsmaterial umfasst.

**6.** Bogen oder Folie aus verstärktem Polycarbonatharz gemäß einem der Ansprüche 1, Ausführungsformen (I) und (II), 2-5, hergestellt durch ein Bogen- oder Folienformverfahren unter Verwendung eines T-förmigen Düsenschmelzextruders mit einer Zylindertemperatur von 260°C oder höher und einer Walzentemperatur von "Glasübergangstemperatur der Harzkomponente + 5°C oder höher" bis "Glasübergangstemperatur der Harzkomponente + 30°C oder niedriger".

**7.** Formprodukt, ausgewählt aus den folgenden Ausführungsformen (a), (b) und (c):

(a) Formgegenstand, erhalten durch Luftdruckformen des Bogens oder der Folie aus verstärktem Polycarbonatharz gemäß einem der Ansprüche 1 bis 6, wobei eine arithmetische mittlere Oberflächenrauheit (Ra) der Oberfläche, die die Düse nicht kontaktiert, 10,0 μm oder weniger beträgt;
(b) Formgegenstand, erhalten durch thermisches Pressformen des Bogens oder der Folie aus verstärktem Polycarbonatharz gemäß einem der Ansprüche 1 bis 6, wobei eine arithmetische mittlere Oberflächenrauheit (Ra) der Oberfläche, die die Düse nicht kontaktiert, 2,0 μm oder weniger beträgt;
(c) Formgegenstand, erhalten unter Verwendung des Bogens oder der Folie aus verstärktem Polycarbonatharz gemäß einem der Ansprüche 1 bis 6 als In-Mold-Folie.

**8.** Verfahren zur Herstellung eines Bogens oder einer Folie aus verstärktem Polycarbonatharz, umfassend:

einen ersten Schritt, bei dem eine Harzzusammensetzung, die eine Harzkomponente, die ein (A) aromatisches Polycarbonat und ein (C) verstärkendes Füllmaterial enthält, erhalten wird;
einen zweiten Schritt, bei dem die Harzzusammensetzung bei einer Temperatur von 260°C oder höher schmelzgeknetet wird, um eine geschmolzene Harzzusammensetzung zu erhalten;
einen dritten Schritt, bei dem die geschmolzene Harzzusammensetzung zu einem Bogen geformt wird; und
einen vierten Schritt, bei dem die zu einem Bogen geformte geschmolzene Harzzusammensetzung mit einer Kühlwalze zusammengepresst wird,
**dadurch gekennzeichnet, dass** im vierten Schritt die Kühlwalze eine Oberflächentemperatur von "Glasübergangstemperatur der Harzkomponente + 5°C oder höher" bis "Glasübergangstemperatur der Harzkomponente + 30°C oder niedriger" aufweist.

**9.** Herstellungsverfahren gemäß Anspruch 8, wobei der erste Schritt die folgenden Schritte umfasst: Schmelzkneten der Harzkomponente, die das (A) aromatische Polycarbonat enthält; und Zugeben des (C) verstärkenden Füllmaterials zu der schmelzgekneteten Harzkomponente.

## Revendications

1. Feuille ou film de résine de polycarbonate aromatique renforcé, qui est sélectionné à partir des modes de réalisation (I) et (II) suivants :

   (I) une feuille ou un film de résine de polycarbonate aromatique renforcé ayant une épaisseur de 0,2 à 1,5 mm comprenant : un composant de résine contenant (A) 40 à 80 parties en masse d'un polycarbonate aromatique ; et (C) 20 à 60 parties en masse d'un matériau de charge de renforcement, où le total de (A) le polycarbonate aromatique et (C) le matériau de charge de renforcement est de 100 parties en masse,
   dans lequel une rugosité superficielle moyenne arithmétique (Ra) d'au moins une surface est de 2,0 $\mu$m ou moins ;
   (II) une feuille ou un film de résine de polycarbonate aromatique renforcé ayant une épaisseur de 0,2 à 1,5 mm, obtenu par le mélange de 100 parties en masse d'un composant de résine contenant (A) 55 à 90 parties en masse d'un polycarbonate aromatique et (B) 10 à 45 parties en masse d'une résine thermoplastique qui est compatible avec le polycarbonate aromatique et présentant un indice de réfraction de 1,56 ou moins à une longueur d'onde de 589 nm, avec (C)5 à 45 parties en masse d'un matériau de charge de renforcement,
   dans lequel « nab » représentant l'indice de réfraction du composant de mélange de résine de (A) et (B) à une longueur d'onde de 589 nm et « nc » représentant l'indice de réfraction du matériau de charge de renforcement (C) à une longueur d'onde de 589 nm satisfont la formule i) ci-dessous :

   $$\text{Formule i)} \quad -0{,}008 \leq nab - nc \leq +0{,}008,$$

   et une rugosité superficielle moyenne arithmétique (Ra) d'au moins une surface est de 2,0 $\mu$m ou moins ;
   **caractérisé en ce que**, dans les modes de réalisation (I) et (II), le matériau de charge de renforcement (C) contient (c-1) une charge fibreuse, dans lequel les fibres ont une longueur de 5 mm ou moins et une forme plate ou elliptique en coupe transversale.

2. Feuille ou film de résine de polycarbonate aromatique renforcé selon la revendication 1, mode de réalisation (II), dans lequel (B) la résine thermoplastique comprend (B-1) une résine acrylique ou (B-2) une résine de polyester aliphatique.

3. Feuille ou film de résine de polycarbonate aromatique renforcé selon la revendication 2, dans lequel (B-1) la résine acrylique est un copolymère de (méth)acrylate dont le rapport en masse (b1/b2) entre un motif (méth)acrylate aromatique (b1) et un motif méthacrylate de méthyle (b2) est de 5 à 50/50 à 95, et dont le poids moléculaire moyen en masse est de 5000 à 30 000.

4. Feuille ou film de résine de polycarbonate aromatique renforcé selon la revendication 2, dans lequel (B-2) la résine de polyester aliphatique est un polycyclohexane diméthanol-cyclohexane dicarboxylate (PCC).

5. Feuille ou film de résine de polycarbonate aromatique renforcé selon l'une quelconque des revendications 1, modes de réalisation (I) et (II), 2 à 4, dans lequel (C) le matériau de charge de renforcement comprend un matériau de renforcement de type verre E.

6. Feuille ou film de résine de polycarbonate aromatique renforcé selon l'une quelconque des revendications 1, modes de réalisation (I) et (II), 2 à 5, qui est produit par un procédé de moulage de feuille ou de film par une machine d'extrusion à l'état fondu à filière en forme de T à une température de corps de 260 °C ou plus et une température de cylindre allant de « la température de transition vitreuse d'un composant de résine + 5 °C ou plus » à « la température de transition vitreuse d'un composant de résine + 30 °C ou moins ».

7. Produit moulé sélectionné parmi les modes de réalisation (a), (b) et (c) suivants :

   (a) un article moulé obtenu par la soumission de la feuille ou du film de résine de polycarbonate aromatique renforcé selon l'une quelconque des revendications 1 à 6 à un moulage sous pression d'air, dans lequel une rugosité superficielle moyenne arithmétique (Ra) de la surface non en contact avec la filière est de 10,0 $\mu$m ou moins ;
   (b) un article moulé obtenu par la soumission de la feuille ou du film de résine de polycarbonate aromatique renforcé selon l'une quelconque des revendications 1 à 6 à un moulage sous presse thermique, dans lequel

une rugosité superficielle moyenne arithmétique (Ra) de la surface non en contact avec la filière est de 2,0 µm ou moins ; et
(c) un article moulé obtenu par l'utilisation de la feuille ou du film de résine de polycarbonate aromatique renforcé selon l'une quelconque des revendications 1 à 6 comme film en moule.

**8.** Procédé pour produire une feuille ou un film de résine de polycarbonate aromatique renforcé comprenant :

une première étape d'obtention d'une composition de résine comprenant un composant de résine contenant (A) un polycarbonate aromatique et (C) un matériau de charge de renforcement ;
une deuxième étape de malaxage à l'état fondu de la composition de résine à une température de 260 °C ou plus pour obtenir une composition de résine fondue ;
une troisième étape de moulage de la composition de résine fondue en une feuille ; et
une quatrième étape de compression de la composition de résine fondue moulée en une feuille avec un cylindre de refroidissement,
**caractérisé en ce que** dans la quatrième étape le cylindre de refroidissement présente une température de surface allant de « la température de transition vitreuse d'un composant de résine + 5 °C ou plus » à « la température de transition vitreuse d'un composant de résine + 30 °C ou moins ».

**9.** Procédé de production selon la revendication 8, dans lequel la première étape comprend les étapes suivantes : le malaxage à l'état fondu du composant de résine contenant (A) le polycarbonate aromatique ; et l'ajout (C) du matériau de remplissage de renforcement au composant de résine malaxé à l'état fondu.

Figure 1

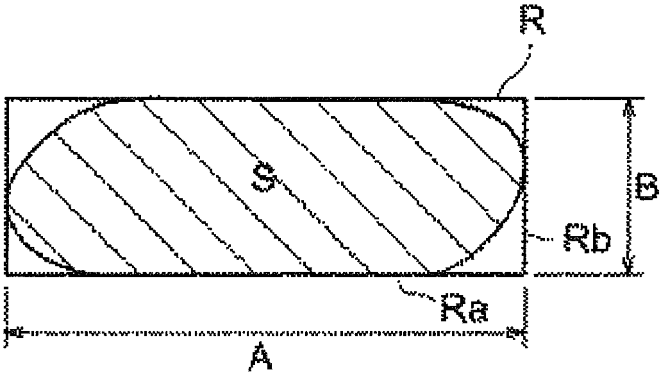

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9012858 A, Heisei
- JP 2006257182 A
- JP 2011140165 A
- JP 1297238 A, Heisei
- JP 2012246343 A
- JP 9095607 A, Heisei
- JP 2006348299 A
- JP 2006124517 A
- EP 1770126 A1
- JP 2012251083 A
- EP 2735589 A1
- JP 63026140 A
- JP 63031513 A